(19) Europäisches Patentamt
European Patent Office
Office européen des brevets

(11) **EP 4 459 560 B1**

(12) **EUROPEAN PATENT SPECIFICATION**

(45) Date of publication and mention
of the grant of the patent:
**22.07.2026 Bulletin 2026/30**

(21) Application number: **22922866.3**

(22) Date of filing: **29.01.2022**

(51) International Patent Classification (IPC):
*H04N 9/31* (2006.01)        *G06T 19/00* (2011.01)
*G06T 15/50* (2011.01)

(52) Cooperative Patent Classification (CPC):
**B60K 35/00; G06T 15/506; G06V 10/60;
G06V 10/95; G06V 20/56; G06V 20/59;
G06V 40/161; H04N 9/3179; H04N 9/3182;
H04N 9/3194;** B60K 2360/176; B60K 2360/177;
B60K 2360/21; B60K 2360/31

(86) International application number:
**PCT/CN2022/074974**

(87) International publication number:
**WO 2023/142035 (03.08.2023 Gazette 2023/31)**

(54) **VIRTUAL IMAGE PROCESSING METHOD AND APPARATUS**

VERFAHREN UND VORRICHTUNG ZUR VERARBEITUNG VIRTUELLER BILDER

PROCÉDÉ ET APPAREIL DE TRAITEMENT D'IMAGE VIRTUELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.11.2024 Bulletin 2024/45**

(73) Proprietor: **Yinwang Intelligent Technologies Co.,
Ltd.
Shenzhen, Guangdong 518129 (CN)**

(72) Inventors:
• **HU, Xiwei
Shenzhen, Guangdong 518129 (CN)**
• **LIU, Yang
Shenzhen, Guangdong 518129 (CN)**

• **LI, Teng
Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 106 133 796        CN-A- 108 305 328
CN-A- 108 986 199        CN-A- 109 495 863
CN-A- 110 310 224        CN-A- 110 871 684
CN-A- 111 260 769        US-A1- 2014 267 412
US-A1- 2019 121 522      US-A1- 2020 013 223
US-A1- 2020 312 004

## Description

## TECHNICAL FIELD

Embodiments of this application relate to the field of virtual reality technologies, and more specifically, to a virtual image processing method and apparatus.

## BACKGROUND

With development of intelligent vehicles, the vehicles can bring increasingly richer multimedia experience to users. However, the vehicles are usually in a driving state during use, and environment changes are complex. This brings challenges to intelligent experience. Therefore, how to improve intelligent service experience in a complex environment has gradually become an important research direction. US 2020/013223A1 discloses a method and system of representing a virtual object in a view of a real environment.

## SUMMARY

Embodiments of this application provide a virtual image processing method and apparatus, so that a virtual image can be more coordinated with an ambient environment, a more realistic visual effect can be implemented, and user experience can be improved.

According to a first aspect, a virtual image processing method is provided and includes: obtaining an image frame of a first environment, where the first environment includes a cabin of a vehicle or an environment in which the vehicle is located, and the image frame is used to determine a lighting parameter of the first environment; obtaining the lighting parameter; and obtaining a virtual image based on the lighting parameter.

The lighting parameter is a parameter of a differentiable lighting model. For example, the lighting parameter may be a spherical harmonic lighting parameter.

In the solutions in embodiments of this application, the virtual image is obtained based on the lighting parameter, so that a lighting effect rendering effect close to or consistent with a light field of a scene (namely, the first environment) in which the image frame is shot can be obtained. In this way, the virtual image is more coordinated with an ambient environment, a more realistic visual effect is implemented, and user experience is improved.

With reference to the first aspect, in some implementations of the first aspect, the image frame includes a face image, and the face image is used to determine the lighting parameter of the first environment.

In the solutions in embodiments of this application, the lighting parameter is determined based on the face image, and the virtual image is obtained based on the lighting parameter. This helps improve coordination between a lighting effect of the virtual image and a light field on a face, and obtain a better rendering effect.

For example, the image frame may include an image of a head of a user in the cabin of the vehicle, and the image of the head of the user is used to determine the lighting parameter.

With reference to the first aspect, the image frame is obtained from an image sensor, and the method further includes: when the first environment is in a first lighting condition, controlling the image sensor to capture an image at a first frequency; and when the first environment is in a second lighting condition, controlling the image sensor to capture an image at a second frequency, where a change frequency of a lighting intensity under the first lighting condition is higher than a change frequency of a lighting intensity under the second lighting condition, and the first frequency is higher than the second frequency.

When a change frequency of a lighting intensity in the first environment is low, an image may be captured at a low frequency. When an image capturing frequency decreases, a frequency of obtaining the lighting parameter and a frequency of lighting effect rendering accordingly decrease. This reduces overall computing overheads, and reduces resource consumption. When the change frequency of the lighting intensity in the first environment is high, an image may be captured at a high frequency. In this case, the lighting parameter can be obtained at a higher frequency, and lighting effect rendering can be performed. This helps ensure real-time performance of lighting effect rendering, and even when a light field condition changes greatly, coordination between the virtual image and the ambient environment can still be ensured.

With reference to the first aspect, , the method further includes: controlling projection of the virtual image in a projection area.

With reference to the first aspect, the projection area includes an area in the cabin of the vehicle.

With reference to the first aspect, in some implementations of the first aspect, when the projection area is a first area in the cabin of the vehicle, the lighting parameter is determined based on a first target area in the image frame; and when the projection area is a second area in the cabin of the vehicle, the lighting parameter is determined based on a second target area in the image frame.

In the solutions in embodiments of this application, when the projection area changes, the lighting parameter is determined based on different target areas in the image frame. In other words, a target area in the image frame may be adjusted based on the projection area. For example, an area presented by a target area in the image frame is set to be as close as possible to the projection area. This helps obtain a lighting parameter that is closest to a lighting condition of the projection area, and improve a lighting effect rendering effect, so that the virtual image is more coordinated with the ambient environment, and a more realistic visual effect is implemented.

With reference to the first aspect, in some implementations of the first aspect, the method further includes: sending the image frame to a server; and the obtaining the lighting parameter includes: obtaining the lighting parameter from the server.

With reference to the first aspect, in some implementations of the first aspect, the obtaining the lighting parameter includes: inputting the image frame into a lighting parameter model to obtain the lighting parameter.

The lighting parameter is determined by using the lighting parameter model, and complex preprocessing does not need to be performed on the image frame. This reduces complexity of an overall computing process, has a low requirement on computing resources, has a high computing speed, and can be applied to a scenario with a high real-time requirement.

With reference to the first aspect, in some implementations of the first aspect, the method further includes: adjusting the projection area in response to a user operation.

For example, the user operation may be sending a voice instruction by the user, and the voice instruction may instruct to adjust the projection area. The projection area is adjusted in response to the voice instruction.

For example, a current virtual image is projected on a center console, and the voice instruction may be "Project the virtual image on the front passenger seat". In response to the voice instruction, the virtual image is controlled to be projected on the front passenger seat.

For example, the user operation may be sending a voice instruction by the user. After a position of the user who sends the voice instruction is detected, the projection area is adjusted based on the position of the user.

In other words, the projection area is related to the position of the user who sends the voice instruction. In this case, the voice instruction may be an instruction that is not related to adjusting the projection area.

For example, the current virtual image is projected on the front passenger seat. When it is detected that the user who currently sends the voice instruction is located in a rear seat, in response to the voice instruction, the projection area is controlled to be transferred from the front passenger seat to an area facing the user in the rear seat.

For example, the user operation may alternatively be another action that affects the projection area.

For example, the current virtual image is projected on the front passenger seat. When it is detected that a vehicle door on a side of the front passenger seat is opened, in response to the operation, the projection area is controlled to be transferred from the front passenger seat to the center console.

According to an example second aspect, a virtual image processing method is provided and includes: obtaining an image frame of a first environment, where the first environment includes a cabin of a vehicle or an environment in which the vehicle is located, and the image frame is used to determine a lighting parameter of the first environment; determining the lighting parameter based on the image frame; and sending the lighting parameter to the vehicle, where the lighting parameter is used for virtual image processing.

According to the solutions in embodiments of this application, the lighting parameter is sent to the vehicle, so that the vehicle can obtain a virtual image based on the lighting parameter, to obtain a lighting effect rendering effect close to or consistent with a light field of a scene in which the image frame is shot. In this way, the virtual image is more coordinated with an ambient environment, a more realistic visual effect is implemented, and user experience is improved.

With reference to the second aspect, in some implementations of the second aspect, the determining the lighting parameter includes: inputting the image frame into a lighting parameter model to obtain the lighting parameter, where the lighting parameter model is obtained through training based on a sample image frame.

The lighting parameter is determined by using the lighting parameter model, and complex preprocessing does not need to be performed on the image frame. This reduces complexity of an overall computing process, has a low requirement on computing resources, has a high computing speed, and can be applied to a scenario with a high real-time requirement.

With reference to the second aspect, in some implementations of the second aspect, the lighting parameter model is obtained by training an initial model by using the sample image frame as input data to reduce a difference between a reconstructed image and the sample image frame, and the reconstructed image is obtained by performing rendering based on a predicted lighting parameter of the sample image frame and a three-dimensional model parameter of a target object in the sample image frame that are output by the initial model.

According to the solutions in embodiments of this application, in a training process, a real lighting parameter of the sample image frame is not required, and the lighting parameter model can be obtained through training when any dataset, for example, a dataset of a face image, is provided. Specifically, a loss function is established based on a difference between the reconstructed image obtained through rendering and an input image, so that the lighting parameter model can be obtained through training. This has a low requirement on a training sample.

With reference to the second aspect, in some implementations of the second aspect, the image frame includes the face image, and the face image is used to determine the lighting parameter of the first environment.

According to an example third aspect, a training method for a lighting parameter model is provided and includes: obtaining a sample image frame; and performing training based on the sample image frame to obtain the lighting parameter model.

With reference to the third aspect, in some implementations of the third aspect, the performing training based on the sample image frame to obtain the lighting parameter model includes: using the sample image frame as an input image of an initial model, and training the initial model to reduce a difference between a reconstructed image and the sample image frame, to obtain a trained model, namely, the lighting parameter model. The reconstructed image is obtained by performing rendering based on a predicted lighting parameter of the sample image frame and a three-dimensional model parameter of a target object in the sample image frame that are output by the initial model.

According to the solutions in embodiments of this application, in a training process, a real lighting parameter of the sample image frame is not required, and the lighting parameter model can be obtained through training when any dataset, for example, a dataset of a face image, is provided. Specifically, the loss function is established based on the difference between the reconstructed image obtained through rendering and the input image, so that the lighting parameter model can be obtained through training. This has a low requirement on a training sample.

With reference to the third aspect, in some implementations of the third aspect, the sample image frame includes a face image, and the target object includes a header.

According to a fourth aspect, a virtual image processing apparatus is provided. The apparatus includes a unit configured to perform the method in any implementation of the first aspect.

According to an example fifth aspect, a virtual image processing apparatus is provided. The apparatus includes a unit configured to perform the method in any implementation of the second aspect.

According to an example sixth aspect, a training apparatus for a lighting parameter model is provided. The apparatus includes a unit configured to perform the method in any implementation of the third aspect.

It should be understood that extensions to, limitations on, explanations for, and description of corresponding content in the first aspect are also applicable to same content in the second aspect, the third aspect, the fourth aspect, the fifth aspect, and the sixth aspect.

According to an example seventh aspect, a virtual image processing apparatus is provided. The apparatus includes: a memory, configured to store a program; and a processor, configured to execute the program stored in the memory. When the program stored in the memory is executed, the processor is configured to perform the method in any implementation of the first aspect or the second aspect.

For example, the apparatus may be a server, for example, a cloud server. Alternatively, the apparatus may be an electronic device on a vehicle end, for example, an in-vehicle apparatus or an in-vehicle chip. Alternatively, the apparatus may be a vehicle.

According to an example eighth aspect, a training apparatus for a lighting parameter model is provided. The training apparatus includes: a memory, configured to store a program; and a processor, configured to execute the program stored in the memory. When the program stored in the memory is executed, the processor is configured to perform the method in any implementation of the third aspect. The training apparatus may be various devices with a computing capability, such as a computer, a host, or a server. Alternatively, the training apparatus may be a chip.

According to a ninth aspect, a computer-readable medium is provided. The computer-readable medium stores program code to be executed by a device. The program code is used to perform the method in any implementation of the first aspect, the second aspect, or the third aspect.

According to an example tenth aspect, a computer program product including instructions is provided. When the computer program product is run on a computer, the computer is enabled to perform the method in any implementation of the first aspect, the second aspect, or the third aspect.

According to an example eleventh aspect, a system is provided. The system includes the apparatus in any implementation of the fourth aspect, the fifth aspect, or the sixth aspect, and an image sensor. The image sensor is configured to capture an image frame of a first environment.

For example, the system may be a vehicle.

Alternatively, the system may be an in-vehicle system. The in-vehicle system includes a server and an electronic device at a vehicle end. The electronic device at the vehicle end may be any one of an in-vehicle chip, an in-vehicle apparatus (for example, a head unit or an on-board computer), or the like.

According to an example twelfth aspect, an electronic device is provided. The electronic device includes the apparatus in any implementation of the fourth aspect, the fifth aspect, or the sixth aspect.

For example, the electronic device may be specifically any one of a vehicle, an in-vehicle chip, an in-vehicle apparatus (for example, a head unit or an on-board computer), or the like.

According to the solutions in embodiments of this application, a virtual image is obtained based on a lighting parameter, so that a lighting effect rendering effect close to or consistent with a light field of a scene in which an image frame is shot can be obtained. In this way, the virtual image is more coordinated with an ambient environment, a more realistic visual effect is implemented, and user experience is improved. In addition, the lighting parameter is determined based on a face image. This helps improve coordination between a lighting effect of the virtual image and a light field on a face, and obtain a better rendering effect. In addition, the lighting parameter is determined by using a lighting model obtained through training, and complex preprocessing does not need to be performed on the image frame. This reduces complexity of an overall computing process, has a low requirement on computing resources, has a high computing speed, and can be applied to a scenario with a high real-time requirement. In addition, when a change frequency of a lighting intensity in a first environment is low, an image may be captured at a low frequency. When an image capturing frequency decreases, a frequency of obtaining the lighting parameter and a frequency of lighting effect rendering accordingly decrease. This reduces overall computing overheads, and reduces resource consumption. When the change frequency of the lighting intensity in the first environment is high, an image may be captured at a high frequency. In this case, the lighting parameter can be obtained at a higher frequency, and lighting effect rendering can be performed. This helps ensure real-time performance of lighting effect rendering, and even when the light field condition changes greatly, coordination between the virtual image and the ambient environment can still be ensured. When a projection area changes, a target area in the image frame may be adjusted based on the projection area. This helps obtain a lighting parameter that is closest to a lighting condition of the projection area, and improve a lighting effect rendering effect, so that the virtual image is more coordinated with the ambient environment, and a more realistic visual effect is implemented.

## BRIEF DESCRIPTION OF DRAWINGS

FIG. 1 is a diagram of a structure of a system architecture according to this application;

FIG. 2 is a diagram of another system architecture according to this application;

FIG. 3 is a schematic flowchart of a virtual image processing method according to this application;

FIG. 4 is a schematic flowchart of a training method for a lighting parameter model according to this application;

FIG. 5 is a diagram of a training process of a lighting parameter model according to this application;

FIG. 6 is a diagram of a lighting effect rendering process according to this application;

FIG. 7 is a schematic flowchart of another virtual image processing method according to this application;

FIG. 8 is a diagram of a position of a camera according to this application;

FIG. 9 is a diagram of a scenario according to this application;

FIG. 10 is a diagram of a lighting effect rendering effect according to this application;

FIG. 11 is a diagram of a virtual image processing apparatus according to this application;

FIG. 12 is a diagram of another virtual image processing apparatus according to this application; and

FIG. 13 is a diagram of a hardware apparatus according to this application.

## DESCRIPTION OF EMBODIMENTS

The following describes technical solutions in embodiments of this application with reference to accompanying drawings.

The solutions in embodiments of this application may be applied to a human-computer interaction scenario in a cabin of a vehicle, to improve intelligent service experience of the vehicle.

In an implementation, an interactive virtual image may be projected in the cabin by using an augmented reality device, to improve service experience of a human-computer interaction in the cabin. The virtual image may provide a plurality of types of services such as a voice assistant or a driving partner for a user. For example, the virtual image may implement a function of a voice assistant. In other words, the virtual image may be used as a visual image of the voice assistant.

For example, the virtual image may provide a head unit control service, an entertainment and communication service, and the like for the user. For example, the user may control hardware like a vehicle window, a vehicle lamp, a vehicle door, a sunroof, and an air conditioner by interacting with the virtual image. For another example, the user may implement operations such as music playing, movie playing, and mail receiving and sending by interacting with the virtual image.

For example, the virtual image may be used as a driving partner to provide a companion service for the user. For example, in a driving process, a virtual image like a virtual partner may be projected on a front passenger seat, to provide companion services such as chatting, singing, and dancing for a driver, so that the driver has more fun in the driving process. This improves user experience. Alternatively, a safety warning function is provided for the driver, to reduce a hazard caused by fatigue driving.

However, the vehicle is in a driving state, and an environment is changing. As a result, the virtual image may not be coordinated with an ambient environment, and user experience is affected.

In the solutions in embodiments of this application, an image frame of an environment of a cabin of a vehicle or an environment in which the vehicle is located is obtained, to obtain a lighting parameter of the cabin or vehicle environment in real time, and obtain a virtual image based on the lighting parameter, for example, perform lighting effect rendering on a to-be-projected virtual image. This helps improve consistency between a lighting effect of the virtual image and a light field condition of an ambient environment, and improve coordination between the virtual image and the ambient environment, so that the virtual image is more realistic, and user experience is further improved.

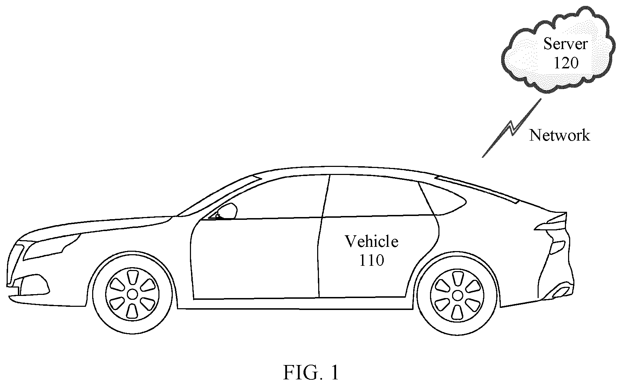

As shown in FIG. 1, an embodiment of this application provides a system 100. The system may include a vehicle 110 and a server 120. The server 120 may provide a service for the vehicle 110 in a form of a cloud. A communication link between the server 120 and the vehicle 110 is bidirectional. To be specific, the server 120 may transmit information to the vehicle 110, and the vehicle 110 may also transmit information to the server 120. Communication between the server 120 and the vehicle 110 may be implemented in a wireless communication and/or wired communication manner. For example, the vehicle 110 accesses a wireless network through a base station, and the server 120 may transmit information to the vehicle 110 through the base station, or may transmit information to the vehicle 110 through a roadside device. The server 120 and the base station may be connected in a wireless or wired manner. The roadside device and the server 120 may be connected in a wireless or wired manner. In addition, the roadside device and the server 120 may communicate with each other through the base station. The wireless network includes but is not limited to: 2G cellular communication, for example, a global system for mobile communications (global system for mobile communications, GSM), or a general packet radio service (general packet radio service, GPRS); 3G cellular communication, for example, wideband code division multiple access (wideband code division multiple access, WCDMA), time division-synchronous code division multiple access (time division-synchronous code division multiple access, TS-SCDMA), or code division multiple access (code division multiple access, CDMA); 4G cellular communication, for example, long term evolution (long term evolution, LTE); 5G cellular communication; or other evolved cellular communication technologies.

In an implementation, the vehicle 110 may upload an image frame captured by a camera to the server 120, and the server 120 may process the image frame to obtain a lighting parameter, and send the lighting parameter to the vehicle 110. For example, a lighting parameter model may be deployed on the server 120, and the lighting parameter model is a neural network model obtained through training. The server 120 obtains a to-be-processed image frame from the vehicle 110, processes the image frame by using the lighting parameter model, to obtain a lighting parameter, and sends the lighting parameter to the vehicle 110. After receiving the lighting parameter, the vehicle 110 may obtain a virtual image based on the lighting parameter, and project the virtual image.

In another implementation, the vehicle 110 may process the image frame captured by the camera, to obtain the lighting parameter. For example, the lighting parameter model is deployed on the vehicle 110, and the image frame obtained from the camera is input into the lighting parameter model, to obtain the lighting parameter. After obtaining the lighting parameter, the vehicle 110 may obtain the virtual image based on the lighting parameter, and project the virtual image. The lighting parameter model is a neural network model obtained through training, and the training may be implemented on a cloud on which the server 120 is located. In addition, the vehicle 110 may obtain a related parameter of the lighting parameter model from the server 120, to update the lighting parameter model. In addition, the vehicle 110 may transmit the captured image frame to the server 120 as a training sample. In this way, the server 120 can obtain, from the vehicle 110, richer sample data that meets an actual environment, to improve accuracy of the lighting parameter model, and continuously improve and update the lighting parameter model.

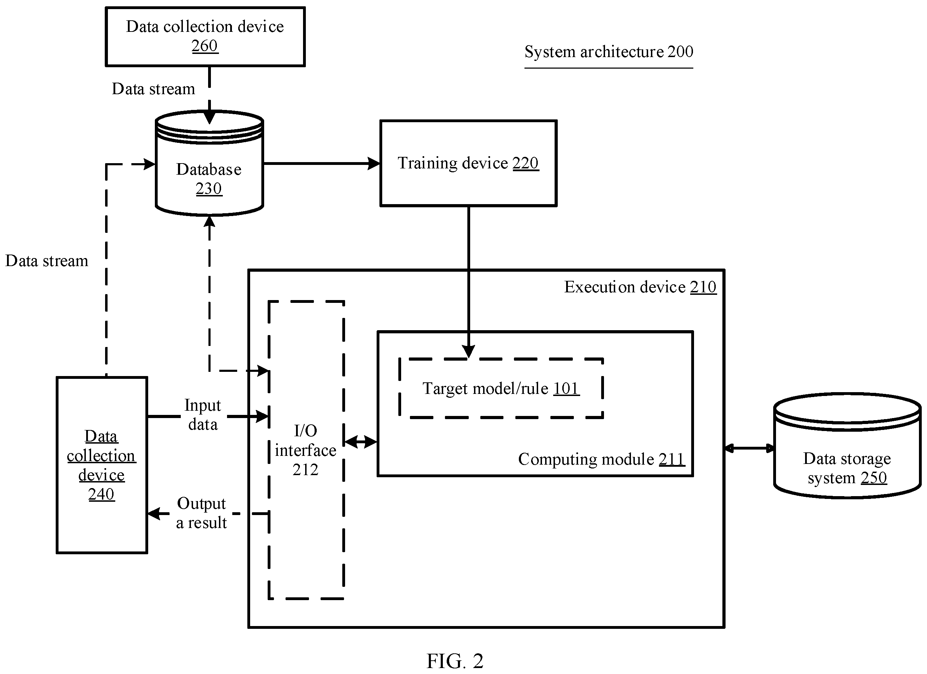

As shown in FIG. 2, an embodiment of this application provides a system architecture 200 used for model training. A lighting parameter model in embodiments of this application may be obtained through training by using the system. In FIG. 2, a data collection device 260 is configured to collect training data. In this embodiment of this application, the training data may be a sample image frame.

After the training data is collected, the training data is stored in a database 230. The data stored in the database 230 may be raw data obtained from the data collection device 260, or data obtained after the raw data is processed. A training device 220 performs training based on the training data maintained in the database 230 to obtain a target model/rule 101.

For example, processing the raw data may include target image obtaining, image size adjustment, data screening, and the like.

For example, a raw image may be processed by using the following process.

(1) Perform face detection on the raw image to obtain a face image (an example of a target image).
(2) Adjust a size of the face image to a preset size.
(3) Perform screening based on pixels of an adjusted face image to obtain a face image that meets a pixel requirement.

The following describes how the training device 220 obtains the target model/rule 101 based on the training data. The training device 220 processes input raw data, and compares an output value with a target value until a difference between a value that is output by the training device 220 and the target value is less than a specific threshold, to complete training of the target model/rule 101.

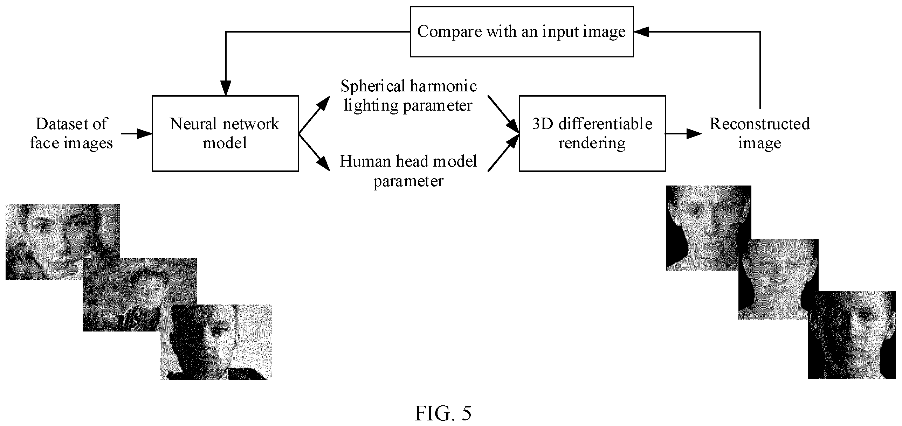

The target model/rule 101 in this embodiment of this application, namely, the lighting parameter model, may be specifically a neural network model. It should be noted that, in an actual application, the training data maintained in the database 230 is not necessarily all collected by the data collection device 260, and some training data may be received from another device. In addition, it should be noted that the training device 220 may not necessarily train the target model/rule 101 entirely based on the training data maintained in the database 230, and may obtain training data from another place to train a model. The foregoing description should not be construed as a limitation on embodiments of this application. For example, the data stored in the database may be data obtained from a plurality of vehicles in a crowdsourcing manner, for example, image frame data collected by the vehicles. A training process of the lighting parameter model is subsequently described with reference to FIG. 5.

The target model/rule 101 obtained through training by the training device 220 may be applied to different systems or devices, for example, applied to an execution device 210 shown in FIG. 2. The execution device 210 may be a terminal, for example, an in-vehicle terminal, or may be a server. In FIG. 2, an input/output (input/output, I/O) interface 212 may be configured for the execution device 210, and is configured to exchange data with an external device. A data collection device 240 may transmit data to the execution device 210. For example, the data collection device 240 may be a terminal, and the execution device 210 may be a server. For example, the data collection device 240 may be an image sensor, and the execution device 210 may be a terminal.

In a process in which the execution device 210 preprocesses input data, or in a process in which a computing module 211 of the execution device 210 performs related processing like computing or the like, the execution device 210 may invoke data, code, and the like in a data storage system 250 for corresponding processing; and may also store, in the data storage system 250, data, instructions, and the like that are obtained through the corresponding processing.

For example, the data collection device 240 may be a terminal, and the execution device 210 may be a server. The server may return a processing result to the terminal.

The training device 220 may generate, for different targets or different tasks, corresponding target models/rules 101 based on different training data. The corresponding target models/rules 101 may be used to achieve the foregoing targets or complete the foregoing tasks, to provide a required result for a user.

In the case shown in FIG. 2, in a possible implementation, the data collection device 240 may automatically send the input data to the execution device 210 in a model training process.

FIG. 2 is merely a diagram of a system architecture according to an embodiment of this application. A position relationship between a device, a component, a module, and the like shown in the figure constitutes no limitation. For example, in FIG. 2, the data storage system 250 is an external memory relative to the execution device 210, and in another case, the data storage system 250 may alternatively be disposed in the execution device 210.

As shown in FIG. 2, the target model/rule 101 is obtained through training by the training device 220. The target model/rule 101 may be the lighting parameter model in this embodiment of this application.

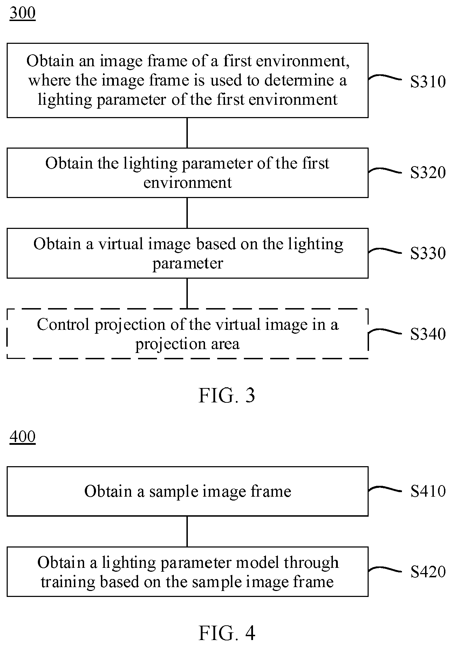

FIG. 3 shows a virtual image processing method 300 according to an embodiment of this application. The method shown in FIG. 3 may be performed by an electronic device at a vehicle end. The electronic device may specifically include one or more of apparatuses such as a vehicle, an in-vehicle chip, or an in-vehicle apparatus (for example, a head unit or an on-board computer). Alternatively, the method shown in FIG. 3 may be performed by a cloud service device. Alternatively, the method shown in FIG. 3 may be performed by a system including a cloud service device and an electronic device at a vehicle end. For example, some steps are performed by the electronic device at the vehicle end, and some steps are performed by the cloud service device on a cloud. In this embodiment of this application, the electronic device at the vehicle end may also be referred to as a vehicle-end device or a vehicle end, and the cloud service device may also be referred to as a cloud server, a cloud device, or a cloud. For example, the method shown in FIG. 3 may be performed by the vehicle 110 or the cloud server 120 in FIG. 1. Alternatively, the method shown in FIG. 3 may be performed by the system 100 in FIG. 1. For example, S310 to S330 are performed by the cloud, and S340 is performed by the vehicle end. The cloud device may send data obtained through processing or a control instruction determined based on the foregoing data to the electronic device at the vehicle end, and the electronic device at the vehicle end controls projection.

The method 300 includes at least step S310 to step S330. The following describes step S310 to step S330 in detail.

S310: Obtain an image frame of a first environment, where the image frame is used to determine a lighting parameter of the first environment.

In an implementation, the method is applied to a vehicle. The first environment is a cabin of the vehicle or an environment in which the vehicle is located. The image frame may be an image frame captured by an image sensor. In other words, a vehicle end (namely, the vehicle) may obtain the image frame from the image sensor.

The image sensor may be an image sensor in the cabin, or may be an image sensor outside the cabin. For example, in terms of functions, the image sensor in the cabin may include a cabin monitoring system (cabin monitoring system, CMS) camera or a driver monitoring system (driver monitoring system, DMS) camera. In terms of attributes, the image sensor in the cabin may include one or more of cameras such as a color camera, a depth camera, or an infrared camera. It should be understood that the image sensor is merely an example, and another type of image sensor may alternatively be used to capture the image frame. This is not limited in embodiments of this application.

For example, the image sensor may be disposed at a position of a rearview mirror in the cabin. In this way, an angle of view of the image sensor may cover areas such as a driver seat, a front passenger seat, and a rear seat.

S320: Obtain the lighting parameter of the first environment.

The lighting parameter of the first environment may be understood as a lighting parameter of a scene in which the image frame is shot. In other words, the lighting parameter can reflect a lighting condition in the scene in which the image frame is shot. The lighting condition may also be referred to as a light field condition. The lighting parameter is used for virtual image processing.

In an implementation, the first environment is an environment in the cabin of the vehicle or the environment in which the vehicle is located.

The lighting parameter is a parameter of a lighting model.

In an implementation, a point light source lighting model is used as an example. The lighting parameter may be an $n_{light} \times 6$ matrix, $n_{light}$ indicates a quantity of point light sources in an environment, and each point light source is indicated by six rational numbers, where the first three rational numbers indicate a position (light position) of the light source, and the last three numbers indicate intensities (light intensities) of red, blue, and green colors of the light source.

In another implementation, a directional light source lighting model is used as an example. The lighting parameter may be an $n_{light} \times 6$ matrix, $n_{light}$ indicates a quantity of directional light sources in an environment, and each directional light source is indicated by six rational numbers, where the first three rational numbers indicate a direction (light direction) of the light source, and the last three rational numbers indicate intensities (light intensities) of red, blue, and green colors of the light source.

In still another implementation, the lighting parameter is a parameter of a differentiable lighting model. For example, the lighting parameter may be a spherical harmonic lighting parameter.

A function of the differentiable lighting model is not limited in embodiments of this application. For ease of understanding, a spherical harmonic lighting function is merely used as an example for description, and is not intended to limit this application.

For example, an expression of the spherical harmonic lighting function may meet the following formula:

$$\int f(x)dx = \sum_{l=0}^{n}\sum_{m=-l}^{l} c_l^m y_l^m \,.$$

Herein, $l$ and $m$ are eigenvalues of the Laplace's equation in spherical coordinates, $n$ indicates an order of a spherical harmonic basis function, namely, a spherical harmonic order, and $m$ is a degree (degree) of the spherical harmonic basis function. $y_l^m$ is the spherical harmonic basis function, $c_l^m$ is a coefficient of a spherical harmonic basis direction corresponding to the spherical harmonic basis function, and the spherical harmonic lighting parameter is a coefficient of each spherical harmonic basis direction. In an example, a spherical harmonic order is 3, that is, $n$ is 2, and a value of $l$ may be 0, 1, or 2. When $l$ is 0, a value of $m$ may be 0. When $l$ is 1, a value of $m$ may be -1, 0, or 1. When $l$ is 2, a value of $m$ may be -2, -1, 0, 1, or 2. In this case, there are a total of nine spherical harmonic basis functions and nine corresponding spherical harmonic lighting parameters (or coefficients) in the expression of the spherical harmonic lighting function. For example, a spherical harmonic lighting parameter of a red green blue (red green blue, RGB) image is determined. The RGB image includes three channels, and each channel has nine spherical harmonic lighting parameters. Therefore, for the RGB image, there are 27 spherical harmonic lighting parameters, that is, a quantity of to-be-predicted spherical harmonic lighting parameters is 27.

In an implementation, the vehicle end may locally obtain the lighting parameter. For example, the vehicle end may determine the lighting parameter. In this case, a lighting parameter model is disposed at the vehicle end, and the obtained image frame is input into the lighting parameter model, to obtain the lighting parameter. The lighting parameter model may be disposed at the vehicle end in advance or sent by a server to the vehicle end. In addition, the lighting parameter model may be obtained through training at a server end. Further, the server end may further update the lighting parameter model through training, and send an updated model or model parameter to the vehicle end.

In another implementation, the vehicle end may alternatively obtain the lighting parameter from another device, that is, receive the lighting parameter sent by the another device. For example, the vehicle end sends the obtained image frame to the server, and the server obtains the image frame from the vehicle end, determines the lighting parameter based on the image frame, and sends the lighting parameter to the vehicle end. That is, the vehicle end may obtain the lighting parameter from the server. In this case, the lighting parameter model is disposed at the server end, and the image frame obtained from the vehicle end is input into the lighting parameter model, to obtain the lighting parameter. The lighting parameter model may be obtained through training at the server end. Further, the server end may further update the lighting parameter model through training, to improve accuracy of the lighting parameter, and further improve consistency between a lighting effect of a virtual image and a light field condition of an ambient environment.

Optionally, the image frame includes a face image. The face image is used to determine the lighting parameter of the first environment.

For example, the virtual image is a character image.

In an image frame, there may be a large difference between lighting parameters of different areas. In the solutions in embodiments of this application, lighting effect rendering is performed on the virtual image (for example, a virtual character image) based on a lighting parameter obtained based on face image information. This helps improve coordination between the lighting effect of the virtual image and a light field of a scene displayed in a target area, and obtain a better rendering effect.

Optionally, the image frame includes the target area, and the target area of the image frame is used to determine the lighting parameter. In the foregoing example, the target area may be a face area.

In this case, the obtained lighting parameter may reflect a lighting condition of a face shot in the image frame.

Further, when the image frame includes a plurality of face areas, at least one of the plurality of face areas may be selected as the target area. For example, the target area may be a face area closest to a projection area of the virtual image in the plurality of face areas. For another example, the target area may be a face area that accounts for a largest proportion in the image frame. For another example, the target area may be a face area in a driver area in the image frame.

It should be understood that the foregoing is merely an example, and the target area may be set based on an actual requirement.

For example, the target area may include a head area of a user. Alternatively, the target area may include an upper body area of the user. Alternatively, the target area may include a hand area of the user. Alternatively, the target area may include an arm area of the user. Alternatively, the target area may include an area in which the user is located.

For another example, the image frame may be an image frame of the environment in which the vehicle is located, and an area in which an out-of-vehicle scenery is located in the image frame may alternatively be used as the target area. Further, an area in which an out-of-vehicle scenery that is close to the vehicle is located in the image frame may be used as the target area. For another example, the image frame may be an image frame in the cabin, and an area in which an ornament on a center console is located in the image frame may alternatively be used as the target area.

The target area in the image frame may include some areas in the image frame, or may include all areas in the image frame.

It should be further understood that the lighting parameter of the first environment may alternatively be defined in another manner. For example, the lighting parameter of the first environment may be an average value of lighting parameters of a plurality of areas in the image frame. For another example, the lighting parameter of the first environment may be a lighting parameter of the target area in the image frame. The foregoing manners constitute no limitation on the solutions in embodiments of this application.

In an implementation, determining the lighting parameter based on the image frame may include: inputting the image frame into the lighting parameter model to obtain the lighting parameter. The lighting parameter model may be obtained through training based on a sample image frame.

After the training is completed, the lighting parameter model may be updated based on a data update or an algorithm update.

A processing process of determining the lighting parameter may be performed by the vehicle end. The vehicle end may obtain the lighting parameter model, for example, receive a parameter of the lighting parameter model sent by the server. Alternatively, the vehicle end may store the lighting parameter model. The vehicle end processes the image frame by using the lighting parameter model, to obtain the lighting parameter.

Alternatively, the foregoing processing process may be performed by another device. For example, the server processes the image frame by using the lighting parameter model, to obtain the lighting parameter. The lighting parameter model may be deployed on the server, or may be deployed at the vehicle end, or may be deployed on another server or terminal. The lighting parameter model is obtained during processing.

When the lighting parameter of the first environment is determined based on the target area in the image frame, the inputting the image frame into the lighting parameter model may include: inputting image information of the target area in the image frame into the lighting parameter model.

For example, the target area is the face area. The face in the image frame may be detected, captured, and segmented by using a face detection method, to obtain the face image information, and then the face image information is input into the lighting parameter model for processing.

For example, the lighting parameter model may be a neural network model. The lighting parameter model may be a model that is built based on a neural network and obtained through training. The neural network herein may be a convolutional neural network (convolutional neural network, CNN), a recurrent neural network (recurrent neural network, RNN), a time recursive neural network (long-short term memory, LSTM), a bidirectional time recursive neural network (bidirectional long-short term memory, BLSTM), a deep convolutional neural network (deep convolutional neural network, DCNN), or the like.

The neural network may include a neural unit. The neural unit may be a computing unit that uses $x_s$ and an intercept of 1 as an input. An output of the computing unit may be, for example, shown as a formula (1):

$$h_{W,b}\left(x\right) = f\left(W^T x\right) = f(\sum_{s=1}^{n} W_s x_s + b) \quad (1).$$

Herein, s=1, 2, ..., n; n is a natural number greater than 1, and represents a quantity of layers of the neural network; $W_s$ is a weight of $x_s$, and may also be referred to as a parameter or coefficient of the neural network; $x_s$ is an input of the neural network; and b is a bias of the neural unit. f is an activation function (activation function) of the neural unit, and the activation function is used to perform non-linear transformation on a feature of the neural network, to convert an input signal in the neural unit into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neural unit may be connected to a local receptive field of a previous layer to extract a feature of the local receptive field. The local receptive field may be an area including several neural units.

The deep neural network (deep neural network, DNN), also referred to as a multi-layer neural network, may be understood as a neural network having a plurality of hidden layers. The DNN is divided based on positions of different layers, so that the neural network in the DNN may be classified into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Optionally, in some implementations, connections between some neurons may be disconnected.

Although the DNN seems to be quite complex, the DNN is actually not complex in terms of work at each layer, and is simply expressed as the following linear relationship expression: $\vec{y} = \alpha (W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha()$ is an activation function. At each layer, the output vector is obtained by performing such a simple operation on the input vector $\vec{x}$. Because there are a plurality of layers in the DNN, there are also a plurality of coefficients $W$ and a plurality of bias vectors $\vec{b}$. Definitions of these parameters in the DNN are as follows: The coefficient $W$ is used as an example. It is assumed that in a DNN having three layers, a linear coefficient from the fourth neuron at the second layer to the second neuron at the third layer is defined as

$W_{24}^3$. The superscript 3 indicates a layer at which the coefficient $W$ is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as

$W_{jk}^L$.

It should be noted that the input layer does not have the parameter $W$. In the deep neural network, more hidden layers enable the network to describe a complex case in the real world. Theoretically, a model with more parameters has higher complexity and a larger "capacity". It indicates that the model can complete a more complex learning task. A process of training the deep neural network is a process of learning a weight matrix, and a final objective of training is to obtain a weight matrix (a weight matrix formed by vectors $W$ at a plurality of layers) at all layers of a trained deep neural network.

A convolutional neural network is a deep neural network of a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units of a same feature plane share a weight, and the shared weight herein is a convolution kernel. Weight sharing may be understood as that an image information extraction manner is not related to a position. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

A training method of the lighting parameter model is described below.

The lighting parameter is determined by using the lighting parameter model, and complex preprocessing does not need to be performed on the image frame. This reduces complexity of an overall computing process, has a low requirement on computing resources, has a high computing speed, and can be applied to a scenario with a high real-time requirement.

It should be understood that the foregoing is merely an example of a manner of determining the lighting parameter. Alternatively, the lighting parameter may be determined in another manner. For example, the lighting parameter may be determined in a de-optimization manner.

In an implementation, the lighting parameter may also be understood as a lighting parameter in the cabin. In embodiments of this application, the lighting parameter in the cabin may alternatively be predicted in another manner.

For example, the lighting parameter in the cabin may be predicted based on the environment in which the vehicle is located.

For example, the vehicle is about to enter a tunnel. In this case, the lighting parameter in the cabin may be predicted based on a lighting parameter in the tunnel. The lighting parameter in the tunnel may be a pre-stored lighting parameter. For example, the pre-stored lighting parameter may be obtained through pre-measurement in the tunnel by using an optical device, or may be a lighting parameter determined by using the solution in this application when another vehicle previously passes through the tunnel. This is not limited in embodiments of this application.

The environment in which the vehicle is located may be determined by using a sensor on the vehicle. For example, it may be determined, based on an out-of-vehicle image frame captured by the image sensor, that the vehicle is about to enter a tunnel. For another example, it may be determined, based on data collected by a radar, that the vehicle is about to enter a tunnel. It should be understood that this is merely an example, and the environment in which the vehicle is located may alternatively be determined in another manner. This is not limited in embodiments of this application.

For example, the lighting parameter in the cabin may be predicted based on a position of the vehicle and weather information.

In other words, the lighting parameter in the cabin is predicted based on a weather condition of the position of the vehicle. For example, a weather condition of an area that is to be passed through on a traveling path of the vehicle is determined based on a weather forecast, and the lighting parameter in the cabin is predicted based on the weather condition.

In this way, the lighting parameter in the cabin can be predicted in advance. This facilitates real-time lighting effect rendering. For example, when the vehicle travels to a position A, an image frame in the cabin is obtained. If a current lighting parameter is not calculated, lighting effect rendering may be performed based on a previously predicted lighting parameter in the cabin at the position A, so that the virtual image is more coordinated with the ambient environment. This improves user experience.

S330: Obtain the virtual image based on the lighting parameter, that is, perform lighting effect rendering on an original virtual image to obtain a rendered virtual image.

That lighting effect rendering is performed on the original virtual image based on the lighting parameter means that the lighting parameter is used during rendering. Step S330 may also be understood as performing rendering based on the lighting parameter and a parameter of the original virtual image.

For example, the virtual image may include various virtual images such as a virtual partner, a virtual prop, a virtual cartoon character, or a virtual pet.

The virtual image may be obtained by using an existing solution. For example, for a virtual image of an augmented reality application, three-dimensional (three Dimension, 3D) mesh (mesh) information and texture information of the virtual image may be obtained, and a 3D virtual image may be obtained by performing 3D rendering on the 3D mesh information and the texture information. During rendering, the lighting parameter obtained in step S320 is used, so that the virtual image that is obtained after lighting effect rendering is performed based on the lighting parameter can be obtained.

According to the solutions in embodiments of this application, the virtual image is obtained based on the lighting parameter of the environment, for example, lighting effect rendering is performed on the original virtual image based on the lighting parameter of the environment, so that a lighting effect rendering effect close to or consistent with a light field of a scene (namely, the environment) in which an image frame is shot can be obtained. In this way, the virtual image is more coordinated with the ambient environment, a more realistic visual effect is implemented, and user experience is improved.

S340: Control projection of the virtual image in the projection area.

Specifically, an augmented reality device may be controlled to project the virtual image in the projection area.

Optionally, the projection area includes an area in the cabin of the vehicle.

The target area in the image frame may not be related to the projection area, or may be related to the projection area.

When the target area in the image frame is not related to the projection area, the target area in the image frame and the projection area do not affect each other. For different projection areas, target areas may be the same.

When the target area in the image frame is related to the projection area, the projection area is considered as an influence factor of the target area in the image frame. For different projection areas, the target areas may be different. Alternatively, it may be understood as that the target area in the image frame may be determined based on the projection area.

Optionally, when the projection area is a first area in the cabin of the vehicle, the target area is a first target area in the image frame; and when the projection area is a second area in the cabin of the vehicle, the target area is a second target area in the image frame.

To be specific, when the projection area is the first area in the cabin of the vehicle, the lighting parameter is determined based on the first target area in the image frame; and when the projection area is the second area in the cabin of the vehicle, the lighting parameter is determined based on the second target area in the image frame.

The first area in the cabin and the second area in the cabin are different areas. The first target area in the target image frame and the second target area in the target image frame are different areas.

For example, the image frame is an in-vehicle image frame. The first area in the cabin may be the front passenger seat, and the face area (an example of the first target area) of the driver in the image frame may be used as the target area. The second area in the cabin may be the center console, and the area (an example of the second target area) in which the ornament on the center console is located in the image frame may be the second target area. A lighting parameter that is obtained when the face area of the driver in the image frame is used as the target area is a lighting parameter around the face of the driver. To be specific, when the virtual image needs to be projected on the front passenger seat, lighting effect rendering may be performed on the original virtual image based on the lighting parameter around the face of the driver, to project the virtual image on the front passenger seat. A lighting parameter that is obtained when the area in which the ornament on the center console is located in the image frame is used as the target area is a lighting parameter around the ornament. To be specific, when the virtual image needs to be projected on the center console, lighting effect rendering may be performed on the original virtual image based on the lighting parameter around the ornament, to project the virtual image on the center console.

In this way, when the projection area changes, the lighting parameter is determined based on different target areas in the image frame. In other words, the target area in the image frame may be adjusted based on the projection area. For example, an area presented by the target area in the image frame is set to be as close as possible to the projection area. This helps obtain a lighting parameter that is closest to a lighting condition of the projection area, and improve a lighting effect rendering effect, so that the virtual image is more coordinated with the ambient environment, and a more realistic visual effect is implemented.

It should be understood that, that the target area in the image frame is related to the projection area does not mean that the target areas are necessarily different when the projection areas are different. A plurality of projection areas may alternatively correspond to a same target area. For example, when a difference between lighting intensities of two projection areas is small, target areas corresponding to the two projection areas may also be the same. For another example, when a distance between two projection areas is small, a difference between lighting intensities of the two projection areas is usually small. In this way, when the distance between the two projection areas is small, target areas corresponding to the two projection areas may also be the same.

Further, in a case in which a distance between the first area and the second area is greater than or equal to a first threshold, when the projection area is the first area in the cabin of the vehicle, the target area is the first target area in the image frame; and when the projection area is the second area in the cabin of the vehicle, the target area is the second target area in the image frame.

When a distance between two projection areas is large, a difference between lighting intensities of the two projection areas may be large, and it is difficult to keep a lighting parameter of a same target area consistent with lighting conditions of the two projection areas, thereby affecting a lighting effect rendering effect. In this case, different areas in the image frame are used as the target areas. For example, an area presented by the target area in the image frame is set to be as close as possible to the projection area. This helps obtain a lighting parameter that is closest to a lighting condition of the projection area, and improve a lighting effect rendering effect, so that the virtual image is more coordinated with the ambient environment, and a more realistic visual effect is implemented.

The shot area in the image frame may not be related to the projection area, or may be related to the projection area. The shot area in the image frame is an area shot by the image sensor that captures the image frame. The shot area in the image frame may also be referred to as an area displayed in the image frame.

When the shot area in the image frame is not related to the projection area, the shot area in the image frame and the projection area do not affect each other. For different projection areas, shot areas in the image frame may be the same.

When the shot area in the image frame is related to the projection area, the projection area is considered as an influence factor of the shot area in the image frame. For different projection areas, the shot areas in the image frame may be different. Alternatively, it may be understood as that the shot area in the image frame may be determined based on the projection area.

For example, when the projection area is a third area in the cabin of the vehicle, the image sensor is controlled to capture the image frame at a first angle; and when the projection area is a fourth area in the cabin of the vehicle, the image sensor is controlled to capture the image frame at a second angle.

The third area in the cabin and the fourth area in the cabin are different areas. The first angle is different from the second angle, and correspondingly, a shot area in the image frame captured by the image sensor at the first angle is different from a shot area in the image frame captured by the image sensor at the second angle. In other words, the image sensor is controlled to shoot different areas.

Alternatively, when the projection area is the third area in the cabin of the vehicle, a first image sensor is controlled to capture an image frame; and when the projection area is the fourth area in the cabin of the vehicle, a second image sensor is controlled to capture an image frame.

Positions of the first image sensor and the second image sensor are different, and correspondingly, a shot area in the image frame captured by the first image sensor is different from a shot area in the image frame captured by the second image sensor. In other words, a plurality of image sensors may be disposed in the vehicle. For example, an image sensor is disposed in front of each seat in the vehicle.

For example, the image frame is an in-vehicle image frame. The third area in the cabin may be the front passenger seat, and the shot area in the image frame may be an area in which the driver is located. For example, the image sensor is controlled to capture the image frame at an angle (an example of the first angle) facing the driver, or an image sensor (an example of the first image sensor) in front of the driver is controlled to capture the image frame. The fourth area in the cabin may be the rear seat, and the shot area in the image frame may be an area in which a passenger in the rear seat is located. For example, the image sensor is controlled to capture the image frame at an angle (an example of the second angle) facing the passenger in the rear seat, or an image sensor (an example of the second image sensor) in front of the passenger in the rear seat is controlled to capture the image frame. In this way, when the virtual image needs to be projected on the front passenger seat, lighting effect rendering may be performed on the original virtual image based on a lighting parameter around the driver, to project the virtual image on the front passenger seat. When the virtual image needs to be projected on the rear seat, lighting effect rendering may be performed on the original virtual image based on a lighting parameter around the passenger in the rear seat, to project the virtual image on the rear seat.

In this way, when the projection area changes, the shot area in the image frame may be adjusted based on the projection area. For example, the shot area in the image frame is set to be as close as possible to the projection area. This helps obtain a lighting parameter that is closest to a lighting condition of the projection area, and improve a lighting effect rendering effect, so that the virtual image is more coordinated with the ambient environment, and a more realistic visual effect is implemented.

It should be understood that, that the shot area in the image frame is related to the projection area does not mean that the shot areas in the image frame are necessarily different when the projection areas are different. Shot areas in the image frame that are corresponding to a plurality of projection areas may also be the same. For example, when a difference between lighting intensities of two projection areas is small, shot areas in the image frame that are corresponding to the two projection areas may also be the same. For another example, when a distance between two projection areas is small, a difference between lighting intensities of the two projection areas is usually small. In this way, when the distance between the two projection areas is small, shot areas in the image frame that are corresponding to the two projection areas may also be the same.

Further, in a case in which a distance between the third area and the fourth area is greater than or equal to a second threshold, when the projection area is the third area in the cabin of the vehicle, the image sensor is controlled to capture the image frame at the first angle; and when the projection area is the fourth area in the cabin of the vehicle, the image sensor is controlled to capture the image frame at the second angle.

Alternatively, in a case in which a distance between the third area and the fourth area is greater than or equal to a second threshold, when the projection area is the third area in the cabin of the vehicle, the first image sensor is controlled to capture an image frame; and when the projection area is the fourth area in the cabin of the vehicle, the second image sensor is controlled to capture an image frame.

The first threshold and the second threshold may be the same or may be different. For example, the first threshold may be 1 m, and the second threshold may be 1.3 m.

When a distance between two projection areas is large, a difference between lighting intensities of the two projection areas may be large, and it is difficult to keep a lighting parameter of a same shot area consistent with lighting conditions of the two projection areas, thereby affecting a lighting effect rendering effect. In this case, the image sensor is controlled to shoot different areas. For example, an area shot by the image sensor is set to be as close as possible to the projection area. This helps obtain a lighting parameter that is closest to a lighting condition of the projection area, and improve a lighting effect rendering effect, so that the virtual image is more coordinated with the ambient environment, and a more realistic visual effect is implemented.

It should be understood that the foregoing is merely an example, and the shot area in the image frame may alternatively be adjusted in another manner. This is not limited in embodiments of this application.

Optionally, the method 300 further includes: adjusting the projection area (not shown in the figure) in response to a user operation.

For example, before the user operation, the projection area is an area A in the cabin, and after the user operation, the projection area is an area B in the cabin. The area A and the area B are different areas.

For example, the user operation may be sending a voice instruction by the user, and the voice instruction may instruct to adjust the projection area. The projection area is adjusted in response to the voice instruction.

For example, a current virtual image is projected on the center console, and the voice instruction may be "Project the virtual image on the front passenger seat". In response to the voice instruction, the virtual image is controlled to be projected on the front passenger seat.

For example, the user operation may be sending a voice instruction by the user. After a position of the user who sends the voice instruction is detected, the projection area is adjusted based on the position of the user.

In other words, the projection area is related to the position of the user who sends the voice instruction. In this case, the voice instruction may be an instruction that is not related to adjusting the projection area.

For example, the current virtual image is projected on the front passenger seat. When it is detected that the user who currently sends the voice instruction is located in the rear seat, in response to the voice instruction, the projection area is controlled to be transferred from the front passenger seat to an area facing the user in the rear seat.

For example, the user operation may alternatively be another action that affects the projection area.

For example, the current virtual image is projected on the front passenger seat. When it is detected that a vehicle door on a side of the front passenger seat is opened, in response to the operation, the projection area is controlled to be transferred from the front passenger seat to the center console.

For another example, the current virtual image is projected on the center console. When it is detected that the user in the front passenger seat leaves, in response to the operation, the projection area is controlled to be transferred from the center console to the front passenger seat.

For example, the current virtual image is projected on the front passenger seat. When it is detected that a user appears in the rear seat, in response to the operation, the projection area is controlled to be transferred from the center console to the rear seat.

Further, different projection areas may project different virtual images.

In other words, when the projection area changes, the virtual image may also change. For example, when the projection area changes, a size of the virtual image may change. For example, a size of the virtual image projected on a seat is greater than that of the virtual image projected on the center console. Alternatively, when the projection area changes, a type of the virtual image may change. For example, a type of the virtual image projected on a seat is a virtual partner, and the virtual image projected on the center console is a virtual cartoon character, a virtual prop, a virtual pet, or the like. In addition, a virtual image selection interface may be provided for the user, and the virtual image of the projection area is set based on a selection of the user. In this way, a projection image that meets a user requirement can be projected in the projection area, to improve user experience.

It should be noted that all virtual images displayed in the projection area in embodiments of this application are virtual images on which lighting effect rendering is performed.

Optionally, when the first environment (for example, the environment in the cabin of the vehicle or the environment in which the vehicle is located) is in a first lighting condition, the image sensor is controlled to capture an image at a first frequency; and when the first environment is in a second lighting condition, the image sensor is controlled to capture an image at a second frequency, where a change frequency of a lighting intensity under the first lighting condition is higher than a change frequency of a lighting intensity under the second lighting condition, and the first frequency is higher than the second frequency.

An image capturing frequency used when the light field condition is stable is lower than an image capturing frequency used when the light field condition changes greatly.

When a change frequency of a lighting intensity in the first environment is high, the image may be captured at a higher frequency, for example, images are captured 10 times every two seconds. When the change frequency of the lighting intensity in the first environment is low, the image may be captured at a low frequency, for example, images are captured once every two seconds. It should be understood that the capturing frequency herein is merely an example, and another capturing frequency may alternatively be set, provided that the first frequency is higher than the second frequency.

A change of the lighting intensity may also be understood as a change of light field information. The light field information refers to emergent lighting intensity information at each single point position in space.

The image capturing frequency may be set as required. For example, a maximum value of the image capturing frequency may be set to 30 times per second, and a minimum value of the image capturing frequency may be set to once every 15 seconds. The image capturing frequency may be adjusted between the minimum value and the maximum value as the lighting intensity changes.

For example, when the vehicle is on a road without an obstacle, an external light source is stable, and the lighting intensity in the cabin of the vehicle is stable, in other words, a change of the lighting intensity is small. In this case, an image may be captured at a low frequency. When the vehicle enters or leaves a tunnel or travels on a road with frequent shade changes, an external light source changes greatly, and the lighting intensity in the cabin of the vehicle changes greatly. In this case, an image may be captured at a high frequency.

When the change frequency of the lighting intensity in the first environment is low, an image may be captured at a low frequency. When an image capturing frequency decreases, a frequency of obtaining the lighting parameter and a frequency of lighting effect rendering accordingly decrease. This reduces overall computing overheads, and reduces resource consumption. When the change frequency of the lighting intensity in the first environment is high, an image may be captured at a high frequency. In this case, the lighting parameter can be obtained at a higher frequency, and lighting effect rendering can be performed. This helps ensure real-time performance of lighting effect rendering, and even when the light field condition changes greatly, coordination between the virtual image and the ambient environment can still be ensured.

For example, when the first environment is in the first lighting condition, the captured image frame is processed at a third frequency; and when the first environment is in the second lighting condition, the captured image frame is processed at a fourth frequency, where the change frequency of the lighting intensity under the first lighting condition is higher than the change frequency of the lighting intensity under the second lighting condition, and the third frequency is higher than the fourth frequency.

When the change frequency of the lighting intensity in the first environment is high, the image may be processed at a higher frequency, for example, images are processed 10 times every two seconds. When the change frequency of the lighting intensity in the first environment is low, the image may be processed at a low frequency, for example, images are processed once every two seconds. It should be understood that the processing frequency herein is merely an example, and another processing frequency may alternatively be set, provided that the third frequency is higher than the fourth frequency. In other words, when change frequencies of lighting intensities are different, even if capturing frequencies of images are the same, a quantity of image processing times may be different. For example, images are captured 20 times every two seconds, and images are processed 10 times every two seconds currently. Alternatively, it may be understood as that 10 frames of images in the 20 frames of images are processed every two seconds to obtain the lighting parameter. When the change frequency of the lighting intensity decreases, images are processed once every two seconds, that is, an image capturing frequency may remain unchanged, and a quantity of image processing times is reduced, or a quantity of processed images is reduced. When the change frequency of the lighting intensity increases, images are processed five times every two seconds, that is, the image capturing frequency may remain unchanged, and the quantity of image processing times is increased, or the quantity of processed images is increased.

When the change frequency of the lighting intensity in the first environment is low, a frequency of obtaining the lighting parameter and a frequency of lighting effect rendering accordingly decrease. This reduces overall computing overheads, and reduces resource consumption. When the change frequency of the lighting intensity in the first environment is high, the lighting parameter is obtained at a higher frequency, and lighting effect rendering is performed. This helps ensure real-time performance of lighting effect rendering, and even when the light source changes greatly, coordination between the virtual image and the ambient environment can still be ensured.

For example, when the first environment is in the first lighting condition, lighting effect rendering is performed on the virtual image at a fifth frequency; and when the first environment is in the second lighting condition, lighting effect rendering is performed on the virtual image at a sixth frequency, where the change frequency of the lighting intensity under the first lighting condition is higher than the change frequency of the lighting intensity under the second lighting condition, and the fifth frequency is higher than the sixth frequency.

When the change frequency of the lighting intensity in the first environment is high, lighting effect rendering may be performed on the virtual image at a higher frequency, for example, rendering is performed 10 times every two seconds based on different lighting parameters. When the change frequency of the lighting intensity in the first environment is low, lighting effect rendering may be performed on the virtual image at a low frequency, for example, rendering is performed once every two seconds. It should be understood that the rendering frequency herein is merely an example, and another rendering frequency may alternatively be set, provided that the fifth frequency is higher than the sixth frequency. In other words, when change frequencies of lighting intensities are different, even if capturing frequencies and processing frequencies of images are the same, a quantity of image processing times may be different. For example, images are captured 10 times every two seconds currently, and the 10 frames of images are processed to obtain lighting parameters of the 10 frames of images. When the change frequency of the lighting intensity decreases, the virtual image is rendered once every two seconds, or lighting effect rendering is performed on the virtual image based on one of a plurality of groups of lighting parameters obtained based on the 10 frames of images. In other words, a capturing frequency and a processing frequency of the image may remain unchanged, and a quantity of times of lighting effect rendering is reduced. When the change frequency of the lighting intensity increases, the virtual image is rendered five times every two seconds. In other words, the capturing frequency and the processing frequency of the image may remain unchanged, and a quantity of times of lighting effect rendering is increased.

When the change frequency of the lighting intensity in the first environment is low, a frequency of lighting effect rendering accordingly decreases. This can reduce computing overheads required for rendering, and reduce resource consumption. When the change frequency of the lighting intensity in the first environment is high, lighting effect rendering is performed at a higher frequency. This helps ensure real-time performance of lighting effect rendering, and even when the light source changes greatly, coordination between the virtual image and the ambient environment can still be ensured.

The change frequency of the lighting intensity may be determined by the vehicle end, or may be determined by the server. The vehicle end may locally obtain the change frequency of the lighting intensity. Alternatively, the vehicle end may obtain the change frequency of the lighting intensity from the server.

For example, the change frequency of the lighting intensity may be determined based on a comparison between lighting parameters used for two consecutive times of lighting effect rendering.

For example, a current lighting parameter is obtained, and the lighting parameter is compared with a previously obtained lighting parameter, to determine a change frequency of a current lighting intensity.

For example, the change frequency of the lighting intensity may be determined by using a light sensor. In other words, the change frequency of the lighting intensity is determined based on a change status of an intensity of an electrical signal output by the light sensor.

For example, the change frequency of the lighting intensity may be determined based on lighting intensities of different areas in a single image frame.

When a difference between the lighting intensities of the different areas in the single image frame is large, the change frequency of the lighting intensity is high. When a difference between the lighting intensities of the different areas in the single image frame is small, the change frequency of the lighting intensity is low.

For example, when the vehicle enters a tunnel, a part of area in the captured single image frame is an image of a part that does not enter the tunnel in the cabin, and a lighting intensity of the part of area is large; and a part of area is an image of a part that enters the tunnel in the cabin, and a lighting intensity of the part of area is small. A difference between lighting intensities of the two parts of areas is large, which can reflect a high change frequency of a current lighting intensity.

For example, the change frequency of the lighting intensity may be determined based on lighting intensities of a plurality of image frames.

The plurality of image frames may be a plurality of image frames that are consecutively captured, or the plurality of image frames may be a plurality of image frames that are inconsecutive.

When a difference between the lighting intensities of the plurality of image frames is large, if an interval between capturing moments of the plurality of image frames is small, a change frequency of the lighting intensities in a capturing time period of the plurality of image frames is high. When a difference between the lighting intensities of the plurality of image frames is small, if an interval between capturing moments of the plurality of image frames is small, a change frequency of the lighting intensities in a capturing time period of the plurality of image frames is low.

For example, when the vehicle enters a tunnel, a plurality of image frames are consecutively captured, and an interval between capturing moments of the plurality of image frames is small. Some image frames in the plurality of image frames are images obtained when the vehicle does not enter the tunnel, and a lighting intensity of the image frames is large; and some image frames are images of a part obtained when the vehicle enters the tunnel, and a lighting intensity of the image frames is small. In other words, a difference between lighting intensities of a plurality of image frames is large, which can reflect a high change frequency of a current lighting intensity.

It should be understood that the foregoing is merely an example, and the change frequency of the lighting intensity may alternatively be determined in another manner. This is not limited in embodiments of this application.

The foregoing describes the virtual image processing method by using an example in which the first environment is the cabin of the vehicle or the environment in which the vehicle is located. The method may also be applied to another virtual reality application scenario, for example, a virtual image like a 3D prop or a virtual character image in a movie and television live broadcast or a movie special effect. A movie and television live broadcast is used as an example. Adding a 3D prop special effect to a video stream requires to obtain light field information of a person in the video stream in real time with low energy consumption. In this scenario, the foregoing method may also be used. In this case, the first environment is an environment in which the person in the video stream is located. For example, in a video stream of a movie and television live broadcast, a face image is captured at a specific frequency, for example, five times per second, the captured face image is input into a lighting parameter model to predict a lighting parameter in the real-time scenario, and then lighting effect rendering is performed on a 3D prop required in the live broadcast based on the predicted lighting parameter, to complete a 3D prop special effect task in the real live video stream.

FIG. 4 is a schematic flowchart of a training method for a lighting parameter model according to an embodiment of this application. The lighting parameter model may be used to determine a lighting parameter in the method 300.

The method shown in FIG. 4 may be performed by a server, for example, a cloud server. In another implementation, the method may be performed by an electronic device at a vehicle end. The electronic device may specifically include one or more of apparatuses such as an in-vehicle chip or an in-vehicle apparatus (for example, a head unit or an on-board computer). Alternatively, the method 400 shown in FIG. 4 may be performed by a cloud service device. Alternatively, the method 400 shown in FIG. 4 may be performed by a system including a cloud service device and an electronic device at a vehicle end.

For example, the method 400 may be performed by the server 120 shown in FIG. 1 or the training device 220 shown in FIG. 2.

The method 400 includes step S410 and step S420. The following describes step S410 and step S420.

S410: Obtain a sample image frame.

For example, the method 400 may be performed by the training device 220 shown in FIG. 2, and the sample image frame may be data stored in the database 230. A data source in the database 230 may be collected by the data collection device 260. Alternatively, a plurality of vehicles may send, in a crowdsourcing manner, image frames captured in a traveling process to the server, and the server stores the image frames in the database.

S420: Obtain a lighting parameter model through training based on the sample image frame.

The lighting parameter model may be a neural network model.

For example, step S420 may include: obtaining the lighting parameter model through training based on the sample image frame and a lighting parameter of the sample image frame.

To be specific, the sample image frame is used as input data of an initial model, and the lighting parameter of the sample image frame is used as a target output of the initial model to train the initial model, to obtain a trained model, namely, the lighting parameter model.

Specifically, the sample image frame is input into the initial model for processing, to obtain a predicted lighting parameter that is of the sample image frame and that is output by the initial model, and adjust a parameter of the initial model to reduce a difference between the predicted lighting parameter of the sample image frame and the lighting parameter of the sample image frame, to obtain the trained model, namely, the lighting parameter model.

The lighting parameter of the sample image frame may be a lighting parameter obtained through labeling, and is used as a real lighting parameter of the sample image frame in a training process, or is used as a target output of a model in a training process. The predicted lighting parameter of the sample image frame is the lighting parameter output by the model.

For example, the lighting parameter may be a spherical harmonic lighting parameter. For a specific description, refer to the foregoing description. Details are not described herein again.

For example, the lighting parameter of the sample image frame may be obtained by measuring a light field in an image shooting environment of the sample image frame by using a photometric device.

For example, the lighting parameter of the sample image frame may alternatively be obtained through computing by using a computing method like de-optimization.

The image frame is input into the lighting parameter model for processing, to obtain the lighting parameter.

However, in the foregoing training method, training is completed based on the lighting parameter of the sample image frame. The lighting parameter obtained by using the photometric device is accurate, which helps ensure a training effect of the model. The method like de-optimization has a large computing amount, has a high requirement on a processor, and consumes long time for computing, but can reduce costs of the photometric device.

Optionally, step S420 may include: using the sample image frame as an input image of the initial model, and training the initial model to reduce a difference between a reconstructed image and the sample image frame, to obtain the trained model, namely, the lighting parameter model. The reconstructed image is obtained by performing rendering based on the predicted lighting parameter of the sample image frame and a three-dimensional model parameter of a target object in the sample image frame that are output by the initial model.

The predicted lighting parameter of the sample image frame is the lighting parameter output by the model.

The performing rendering based on the predicted lighting parameter of the sample image frame and a three-dimensional model parameter of a target object in the sample image frame that are output by the initial model may also be understood as performing lighting effect rendering on the three-dimensional model of the target object based on the predicted lighting parameter of the sample image frame output by the initial model.

In other words, the sample image frame is used as the input data of the initial model. The initial model outputs the predicted lighting parameter of the sample image frame and the three-dimensional model parameter of the target object in the sample image frame, and rendering is performed based on the predicted lighting parameter of the sample image frame and the three-dimensional model parameter of the target object in the sample image frame, to obtain the reconstructed image. The parameter of the initial model is adjusted to reduce a difference between the reconstructed image and the input image, until training is completed, to obtain the trained model, namely, the lighting parameter model.

Adjusting the parameter of the initial model to reduce the difference between the reconstructed image and the input image is optimizing the parameter of the initial model by using a loss function, so that the reconstructed image is continuously close to the input image. The loss function indicates the difference between the reconstructed image and the input image. In other words, the loss function is established based on the difference between the reconstructed image and the input image.

In a process of training a deep neural network, because it is expected that an output of the deep neural network is as much as possible close to a predicted value that is actually expected, a predicted value of a current network and a target value that is actually expected may be compared, and then a weight of each layer of the neural network is updated based on a difference between the predicted value and the target value (certainly, there is usually an initialization process before the first update, to be specific, weights are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the predicted value and the target value" is predefined. This is a loss function or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

For example, the loss function may be an L1 norm loss function. The L1 norm loss function may also be referred to as a minimum absolute value deviation.

For example, a difference between a pixel value of the reconstructed image and a pixel value of the input image is measured based on the L1 norm loss function.

Alternatively, the loss function may be another type of loss function, for example, an L2 norm loss function. This is not limited in embodiments of this application.

Optionally, the sample image frame includes a face image, and the target object includes a header. In embodiments of this application, a face area may also be referred to as a face image.

The lighting parameter model obtained through training in the foregoing manner may be used to determine the lighting parameter. For example, the lighting parameter model may be used to determine a lighting parameter of a face area in an image frame.

For example, as shown in FIG. 5, a lighting parameter model is trained based on a dataset of face images. In other words, a sample image frame is a face image. The lighting parameter model may be a neural network model. The face image is input into the neural network model for processing, and two groups of parameters, namely, a group of spherical harmonic lighting parameters and a group of 3D human head model parameters, are output. 3D differentiable rendering is performed based on the two groups of parameters to obtain a 3D reconstructed human head image, namely, a reconstructed image. The reconstructed image is compared with an input image (namely, the face image) of the model, and a parameter of the model is optimized by using a loss function, so that a difference between the reconstructed image and the input image is continuously reduced, or the two images are continuously close.

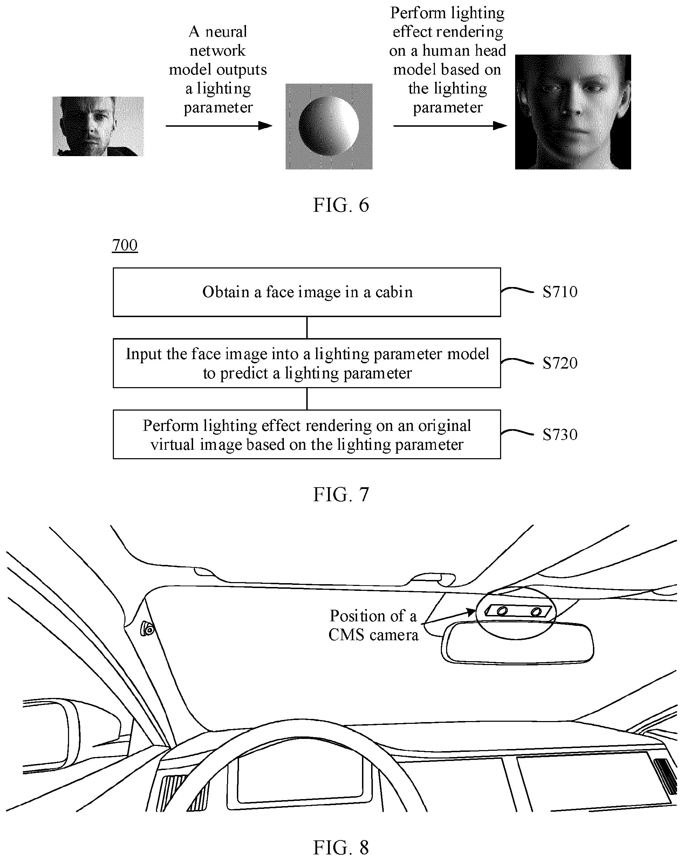

An image frame is input into the trained lighting parameter model for processing, and a lighting parameter of a face area in the image frame may be output. Then, rendering may be performed on a virtual image based on the lighting parameter. For example, as shown in FIG. 6, the lighting parameter model outputs the lighting parameter, and lighting effect rendering is performed on a human head model based on the lighting parameter, to obtain a rendered human head model. It can be learned from FIG. 6 that, lighting on the right side of a face in the image frame is strong, lighting on the left side of the face is weak, lighting on the right side of a rendered head is strong, and lighting on the left side of the rendered head is weak. It should be understood that, in FIG. 6, the human head model is merely used as an example to describe a lighting effect rendering effect, and constitutes no limitation on embodiments of this application.

According to the solutions in embodiments of this application, in a training process, a real lighting parameter of the sample image frame is not required, and the lighting parameter model can be obtained through training when any dataset, for example, a dataset of a face image, is provided. Specifically, the loss function is established based on the difference between the reconstructed image obtained through rendering and the input image, so that the lighting parameter model can be obtained through training. This has a low requirement on a training sample.

FIG. 7 is a schematic flowchart of a virtual image processing method according to an embodiment of this application. The method 700 shown in FIG. 7 may be considered as a specific implementation of the method 300 shown in FIG. 3. For specific descriptions, refer to the foregoing descriptions of the method 300. To avoid repetition, some descriptions are appropriately omitted when the method 700 is described.

The method shown in FIG. 7 may be performed by a vehicle end, for example, one or more of apparatuses such as a vehicle, an in-vehicle chip, or an in-vehicle apparatus (for example, a head unit or an on-board computer). Alternatively, the method shown in FIG. 7 may be performed by a cloud service device. Alternatively, the method shown in FIG. 7 may be performed by a system including a cloud service device and an electronic device at a vehicle end. In this embodiment of this application, the electronic device at the vehicle end may also be referred to as a vehicle-end device or a vehicle end, and the cloud service device may also be referred to as a cloud server, a cloud device, or a cloud.

For example, the method shown in FIG. 7 may be applied to the system 100 in FIG. 1, and is performed by the vehicle 110 or an in-vehicle chip or an in-vehicle apparatus on the vehicle 110.

In the method 700, a face area in an image frame is used as a target area.

S710: Obtain a face image in a cabin.

For example, the face image may be an RGB image.

The face image may be captured by an image sensor.

Optionally, when a first environment is in a first lighting condition, the image sensor is controlled to capture an image at a first frequency; and when the first environment is in a second lighting condition, the image sensor is controlled to capture an image at a second frequency, where a change frequency of a lighting intensity under the first lighting condition is higher than a change frequency of a lighting intensity under the second lighting condition, and the first frequency is higher than the second frequency.

For example, the image sensor may be a CMS camera, and may capture an image in the cabin in real time.

For example, as shown in FIG. 8, the CMS camera may be disposed at a position of a rearview mirror in the cabin. In this way, an angle of view of the CMS camera may cover a driver seat, a front passenger seat, and a rear seat.

When light field information is stable, an image is captured at a low frequency. For example, the CMS camera captures an image once every two seconds. When the light field information changes greatly, an image is captured at a high frequency. For example, the CMS camera captures images 10 times every two seconds.

In this way, even if the CMS camera is in an enabled state, because the light field information in the cabin is in a stable state in most time in a traveling process of the vehicle, an image may be captured at a low frequency, so that resource consumption can be greatly reduced.

A range of a face area in the image captured by the image sensor may be small. For example, when the angle of view of the CMS camera covers the driver seat, the front passenger seat, and the rear seat, the range of the face area may be small. In this case, the image captured by the image sensor may be processed to obtain the face image. In this way, a lighting parameter of the face area can be obtained more accurately.

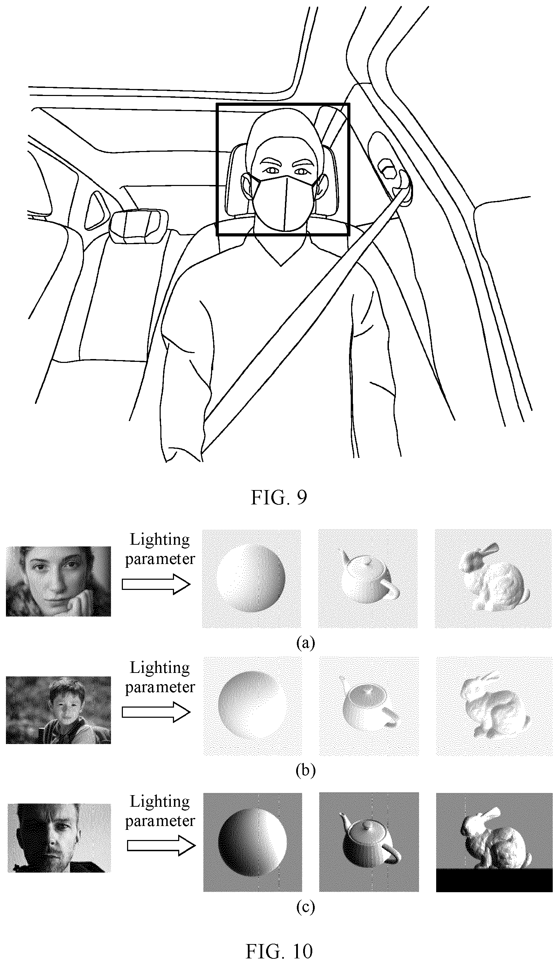

For example, as shown in FIG. 9, in the image captured by the CMS camera, a range of a face area of a driver is small. A face in the image captured by the CMS camera may be detected, captured, and segmented by using a face detection method, to obtain a face image of the driver, namely, an area in the rectangular frame in FIG. 9.

S720: Input the face image into a lighting parameter model to predict a lighting parameter.

The lighting parameter model may be a trained neural network model.

For a specific training method, refer to the method 400. Details are not described herein again.

For example, the lighting parameter is a spherical harmonic lighting parameter. For example, if a spherical harmonic order is set to 3, for an RGB image, the lighting parameter model outputs 27 lighting parameters.

S730: Perform lighting effect rendering on an original virtual image based on the lighting parameter.

The original virtual image may be obtained by performing 3D rendering on 3D mesh information and texture information of the original virtual image.

For example, the method 700 may be performed in real time, that is, lighting effect rendering is performed on the original virtual image in real time. A rendered virtual image is projected in a projection area, for example, projected on the front passenger seat.

In this way, a lighting effect rendering effect close to or consistent with a lighting effect in the cabin can be obtained in real time.

In another embodiment, the foregoing step S720 may be performed on the server. The vehicle sends the obtained face image to the server, and the server inputs the face image into the lighting parameter model to predict the lighting parameter, and sends the lighting parameter to the vehicle.

FIG. 10 is a diagram of a plurality of groups of models obtained after lighting effect rendering. For example, the face image in FIG. 10 may be the image in the area in the rectangular frame in FIG. 9. A lighting parameter may be used to perform lighting effect rendering on different objects. For example, as shown in FIG. 10, lighting effect rendering is separately performed on a ball model, a teapot model, and a rabbit model based on a lighting parameter of a face image, so that a lighting effect of a rendered model is close to or consistent with an environment of a light field in which a face is located. For example, lighting on the right side and the left side of a face in (a) in FIG. 10 is strong, lighting effect rendering is performed on each model based on a lighting parameter obtained based on a face image, and lighting on the right side and the left side of the model obtained after lighting effect rendering is strong. For another example, lighting on the upper right side of each face in (b) and (c) in FIG. 10 is strong, lighting effect rendering is performed on each model based on a lighting parameter obtained based on a face image, and lighting on the upper right side of the model obtained after lighting effect rendering is strong. The lighting on the upper right side of the face in (b) in FIG. 10 is stronger than the lighting on the upper right side of the face in (c) in FIG. 10. Correspondingly, the lighting on the upper right side of the rendered model in (b) in FIG. 10 is stronger than the lighting on the upper right side of the rendered model in (c) in FIG. 10. It should be understood that, FIG. 10 is merely an example of lighting effect rendering, and constitutes no limitation on an object of lighting effect rendering in embodiments of this application.

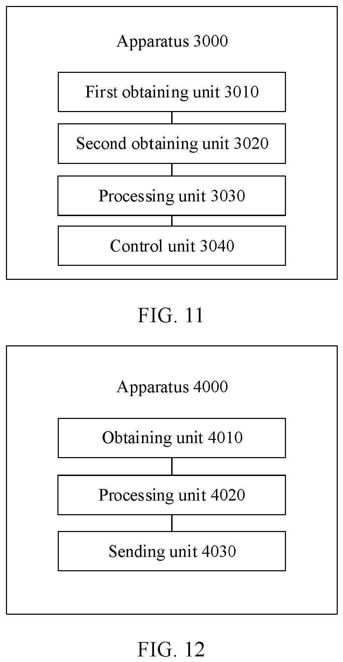

The following describes apparatuses in embodiments of this application with reference to FIG. 11 to FIG. 13. It should be understood that the apparatuses described below can perform the method in the foregoing embodiments of this application. To avoid unnecessary repetition, repeated descriptions are appropriately omitted when the apparatuses in embodiments of this application are described below.

FIG. 11 is a block diagram of a virtual image processing apparatus according to an embodiment of this application. The virtual image processing apparatus 3000 shown in FIG. 11 includes a first obtaining unit 3010, a second obtaining unit 3020, and a processing unit 3030.

The apparatus 3000 may be configured to perform the virtual image processing method in embodiments of this application, and may be specifically configured to perform the method 300 or the method 700. For example, the first obtaining unit 3010 may perform the foregoing step S310, the second obtaining unit 3020 may perform the foregoing step S320, and the processing unit 3030 may perform the foregoing step S330. For another example, the first obtaining unit 3010 may perform the foregoing step S710, the second obtaining unit 3020 may perform the foregoing step S720, and the processing unit 3030 may perform the foregoing step S730.

For example, the first obtaining unit 3010 is configured to obtain an image frame of a first environment, where the first environment includes a cabin of a vehicle or an environment in which the vehicle is located, and the image frame is used to determine a lighting parameter of the first environment. The second obtaining unit 3020 may be configured to obtain the lighting parameter.

The processing unit 3030 is configured to obtain a virtual image based on the lighting parameter.

For example, the lighting parameter may be a parameter of a differentiable lighting model. For example, the lighting parameter may be a spherical harmonic lighting parameter.

Optionally, the image frame includes a face image, and the face image is used to determine the lighting parameter of the first environment.

For example, the image frame may include an image of a head of a user in the cabin of the vehicle, and the image of the head of the user is used to determine the lighting parameter.

Optionally, the image frame is obtained from an image sensor, and the apparatus 3000 further includes a control unit 3040, configured to: when the first environment is in a first lighting condition, control the image sensor to capture an image at a first frequency; and when the first environment is in a second lighting condition, control the image sensor to capture an image at a second frequency, where a change frequency of a lighting intensity under the first lighting condition is higher than a change frequency of a lighting intensity under the second lighting condition, and the first frequency is higher than the second frequency.

Optionally, the control unit 3040 is further configured to control projection of the virtual image in a projection area.

Optionally, the projection area includes an area in the cabin of the vehicle.

Optionally, when the projection area is a first area in the cabin of the vehicle, the lighting parameter is determined based on a first target area in the image frame; and when the projection area is a second area in the cabin of the vehicle, the lighting parameter is determined based on a second target area in the image frame.

Optionally, the apparatus 3000 further includes a sending unit, configured to send the image frame to a server. The second obtaining unit 3020 is specifically configured to obtain the lighting parameter from the server.

Optionally, the second obtaining unit 3020 is specifically configured to input the image frame into a lighting parameter model to obtain the lighting parameter.

Optionally, the apparatus 3000 includes an adjustment unit, configured to adjust the projection area in response to a user operation.

For example, the user operation may be sending a voice instruction by the user, and the voice instruction may instruct to adjust the projection area. The projection area is adjusted in response to the voice instruction.

For example, a current virtual image is projected on a center console, and the voice instruction may be "Project the virtual image on the front passenger seat". In response to the voice instruction, the virtual image is controlled to be projected on a front passenger seat.

For example, the user operation may be sending a voice instruction by the user. After a position of the user who sends the voice instruction is detected, the projection area is adjusted based on the position of the user.

In other words, the projection area is related to the position of the user who sends the voice instruction. In this case, the voice instruction may be an instruction that is not related to adjusting the projection area.

For example, the current virtual image is projected on the front passenger seat. When it is detected that the user who currently sends the voice instruction is located in a rear seat, in response to the voice instruction, the projection area is controlled to be transferred from the front passenger seat to an area facing the user in the rear seat.

For example, the user operation may alternatively be another action that affects the projection area.

For example, the current virtual image is projected on the front passenger seat. When it is detected that a vehicle door on a side of the front passenger seat is opened, in response to the operation, the projection area is controlled to be transferred from the front passenger seat to the center console.

FIG. 12 is a block diagram of a virtual image processing apparatus according to an embodiment of this application. The virtual image processing apparatus 4000 shown in FIG. 12 includes an obtaining unit 4010, a processing unit 4020, and a sending unit 4030.

The obtaining unit 4010 and the processing unit 4020 may be configured to perform the virtual image processing method in embodiments of this application, and may be specifically configured to perform the method 300 or the method 700.

Specifically, the obtaining unit 4010 is configured to obtain an image frame of a first environment, where the first environment includes a cabin of a vehicle or an environment in which the vehicle is located, and the image frame is used to determine a lighting parameter of the first environment.

The processing unit 4020 is configured to determine the lighting parameter based on the image frame.

The sending unit 4030 is configured to send the lighting parameter to the vehicle, where the lighting parameter is used for virtual image processing.

Optionally, the processing unit 4020 is specifically configured to: input the image frame into a lighting parameter model to obtain the lighting parameter, where the lighting parameter model is obtained through training based on a sample image frame.

Optionally, the lighting parameter model is obtained by training an initial model by using the sample image frame as input data to reduce a difference between a reconstructed image and the sample image frame, and the reconstructed image is obtained by performing rendering based on a lighting parameter of the sample image frame and a three-dimensional model parameter of a target object in the sample image frame that are output by the initial model.

Optionally, the image frame includes a face image, and the face image is used to determine the lighting parameter of the first environment.

It should be noted that the foregoing processing apparatus 3000 and apparatus 4000 are embodied in a form of functional units. The term "unit" herein may be implemented in a form of software and/or hardware. This is not specifically limited.

For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, in the examples described in embodiments of this application, the units can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

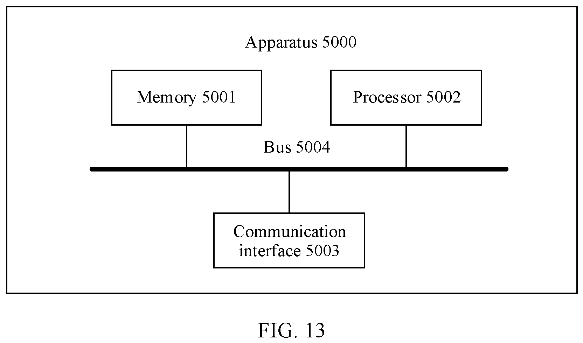

FIG. 13 is a diagram of a hardware structure of an apparatus according to an embodiment of this application. The apparatus 5000 (the apparatus 5000 may be specifically a computer device) shown in FIG. 13 includes a memory 5001, a processor 5002, a communication interface 5003, and a bus 5004. The memory 5001, the processor 5002, and the communication interface 5003 are communicatively connected to each other through the bus 5004.

The memory 5001 may be a read-only memory (read-only memory, ROM), a static storage device, a dynamic storage device, or a random access memory (random access memory, RAM). The memory 5001 may store a program. When the program stored in the memory 5001 is executed by the processor 5002, the processor 5002 is configured to perform steps of the virtual image processing method in embodiments of this application. For example, the processor 5002 may perform the method 300 shown in FIG. 3 or the method 700 shown in FIG. 7. Alternatively, the processor 5002 is configured to perform steps of the training method for the lighting parameter model in embodiments of this application. For example, the processor 5002 may perform the method 400 shown in FIG. 4.

The processor 5002 may be a general-purpose central processing unit (central processing unit, CPU), a microprocessor, an ASIC, a graphics processing unit (graphics processing unit, GPU), or one or more integrated circuits, and is configured to execute a related program, to implement the virtual image processing method or the training method for the lighting parameter model in the method embodiments of this application.

The processor 5002 may alternatively be an integrated circuit chip, and has a signal processing capability. During implementation, steps of the virtual image processing method in this application can be implemented by using a hardware integrated logic circuit or an instruction in a form of software in the processor 5002.

The foregoing processor 5002 may alternatively be a general-purpose processor, a digital signal processor (digital signal processor, DSP), an ASIC, a field programmable gate array (field programmable gate array, FPGA) or another programmable logic device, a discrete gate or transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 5001. The processor 5002 reads information in the memory 5001, and completes, in combination with hardware of the processor 5002, functions that need to be performed by units included in the processing apparatus shown in FIG. 11 or FIG. 12, or performs the virtual image processing method or the training method for the lighting parameter model in the method embodiments of this application.

The communication interface 5003 uses a transceiver apparatus, for example, but not limited to, a transceiver, to implement communication between the apparatus 5000 and another device or a communication network. For example, a face image may be obtained through the communication interface 5003.

The bus 5004 may include a channel through which information is transmitted between parts (for example, the memory 5001, the processor 5002, and the communication interface 5003) of the apparatus 5000.

An embodiment of this application further provides a computer-readable medium. The computer-readable medium stores program code to be executed by a device, and the program code is used to perform the virtual image processing method or the training method for the lighting parameter model in embodiments of this application.

An embodiment of this application further provides a computer program product including instructions. When the computer program product runs on a computer, the computer is enabled to perform the virtual image processing method or the training method for the lighting parameter model in embodiments of this application.

An embodiment of this application further provides a chip. The chip includes a processor and a data interface. The processor reads, through the data interface, instructions stored in a memory, to perform the virtual image processing method or the training method for the lighting parameter model in embodiments of this application.

Optionally, in an implementation, the chip may further include a memory. The memory stores instructions. The processor is configured to execute the instructions stored in the memory. When the instructions are executed, the processor is configured to perform the virtual image processing method or the training method for the lighting parameter model in embodiments of this application.

An embodiment of this application further provides a system. The system includes the virtual image processing apparatus in embodiments of this application and the image sensor. The image sensor is configured to capture an image frame of a first environment.

For example, the system may be a vehicle.

Alternatively, the system may be an in-vehicle system. The in-vehicle system includes a server and an electronic device at a vehicle end. The electronic device at the vehicle end may be any one of an in-vehicle chip, an in-vehicle apparatus (for example, a head unit or an on-board computer), or the like.

It should be understood that in embodiments of this application, the processor may be a central processing unit (central processing unit, CPU), or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions or computer programs. When the computer instructions or the computer programs are loaded or executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

**Claims**

1. A virtual image processing method, comprising:

   obtaining (S310) an image frame of a first environment, wherein the first environment comprises a cabin of a vehicle or an environment in which the vehicle is located, and the image frame is used to determine a lighting parameter of the first environment;
   obtaining (S320) the lighting parameter;
   obtaining (S330) a virtual image based on the lighting parameter to improve consistency between a lighting effect of the virtual image and a lighting condition of the first environment; and
   controlling (S340) projection of the virtual image in a projection area, wherein the projection area comprises an area in the cabin of the vehicle;
   wherein the image frame is obtained from an image sensor;
   **characterised in that** the method further comprises:

when the first environment is in a first lighting condition, controlling the image sensor to capture an image at a first frequency; and when the first environment is in a second lighting condition, controlling the image sensor to capture an image at a second frequency, wherein a change frequency of a lighting intensity under the first lighting condition is higher than a change frequency of a lighting intensity under the second lighting condition, and the first frequency is higher than the second frequency.

2. The method according to claim 1, wherein the image frame comprises a face image, and the face image is used to determine the lighting parameter of the first environment.

3. The method according to claim 1 or 2, wherein when the projection area is a first area in the cabin of the vehicle, the lighting parameter is determined based on a first target area in the image frame; and when the projection area is a second area in the cabin of the vehicle, the lighting parameter is determined based on a second target area in the image frame.

4. The method according to any one of claims 1 to 3, further comprising:

sending the image frame to a server; and
the obtaining the lighting parameter comprises:
obtaining the lighting parameter from the server.

5. The method according to any one of claims 1 to 3, wherein the obtaining the lighting parameter comprises:
inputting the image frame into a lighting parameter model to obtain the lighting parameter.

6. A virtual image processing apparatus (3000), comprising:

a first obtaining unit (3010), configured to obtain an image frame of a first environment, wherein the first environment comprises a cabin of a vehicle or an environment in which the vehicle is located, and the image frame is used to determine a lighting parameter of the first environment;
a second obtaining unit (3020), configured to obtain the lighting parameter; and
a processing unit (3030), configured to obtain a virtual image based on the lighting parameter to improve consistency between a lighting effect of the virtual image and a lighting condition of the first environment,
wherein the image frame is obtained from an image sensor, and the apparatus further comprises a control unit (3040), configured to:

control projection of the virtual image in a projection area, wherein the projection area comprises an area in the cabin of the vehicle;
**characterised in that** the control unit (3040) is further configured to:

when the first environment is in a first lighting condition, control the image sensor to capture an image at a first frequency; and
when the first environment is in a second lighting condition, control the image sensor to capture an image at a second frequency, wherein a change frequency of a lighting intensity under the first lighting condition is higher than a change frequency of a lighting intensity under the second lighting condition, and the first frequency is higher than the second frequency.

7. The apparatus (3000) according to claim 6, wherein the image frame comprises a face image, and the face image is used to determine the lighting parameter of the first environment.

8. The apparatus (3000) according to claim 6 or 7, wherein when the projection area is a first area in the cabin of the vehicle, the lighting parameter is determined based on a first target area in the image frame; and when the projection area is a second area in the cabin of the vehicle, the lighting parameter is determined based on a second target area in the image frame.

9. The apparatus (3000) according to any one of claims 6 to 8, wherein the apparatus further comprises a sending unit, configured to:

send the image frame to a server; and
the second obtaining unit (3020) is specifically configured to:
obtain the lighting parameter from the server.

10. The apparatus (3000) according to any one of claims 6 to 8, wherein the second obtaining unit (3020) is specifically configured to:
input the image frame into a lighting parameter model to obtain the lighting parameter.

11. A computer-readable storage medium, wherein the computer-readable medium stores program code which, when executed by a device, causes the device to perform the method according to any one of claims 1 to 5.

**Patentansprüche**

1. Verfahren zur Verarbeitung virtueller Bilder, umfassend:

   Erhalten (S310) eines Einzelbilds einer ersten Umgebung, wobei die erste Umgebung einen Innenraum eines Fahrzeugs oder eine Umgebung, in der sich das Fahrzeug befindet, umfasst, und das Einzelbild verwendet wird, um einen Beleuchtungsparameter der ersten Umgebung zu bestimmen;
   Erhalten (S320) des Beleuchtungsparameters;
   Erhalten (S330) eines virtuellen Bildes auf der Grundlage des Beleuchtungsparameters, um die Konsistenz zwischen einem Beleuchtungseffekt des virtuellen Bildes und einer Beleuchtungssituation der ersten Umgebung zu verbessern; und Steuern (S340) der Projektion des virtuellen Bildes in einem Projektionsbereich, wobei der Projektionsbereich einen Bereich im Innenraum des Fahrzeugs umfasst;
   wobei das Einzelbild von einem Bildsensor erhalten wird;
   **dadurch gekennzeichnet, dass** das Verfahren ferner Folgendes umfasst:

      wenn sich die erste Umgebung in einer ersten Beleuchtungssituation befindet, Steuern des Bildsensors zum Erfassen eines Bildes mit einer ersten Häufigkeit; und wenn sich die erste Umgebung in einer zweiten Beleuchtungssituation befindet, Steuern des Bildsensors zum Erfassen eines Bilds mit einer zweiten Häufigkeit, wobei eine Änderungshäufigkeit einer Beleuchtungsintensität in der ersten Beleuchtungssituation höher ist als eine Änderungshäufigkeit einer Beleuchtungsintensität in der zweiten Beleuchtungssituation, und die erste Häufigkeit höher ist als die zweite Häufigkeit.

2. Verfahren nach Anspruch 1, wobei das Einzelbild ein Gesichtsbild umfasst und das Gesichtsbild zum Bestimmen des Beleuchtungsparameters der ersten Umgebung verwendet wird.

3. Verfahren nach Anspruch 1 oder 2, wobei, wenn der Projektionsbereich ein erster Bereich im Innenraum des Fahrzeugs ist, der Beleuchtungsparameter auf der Grundlage eines ersten Zielbereichs im Einzelbild bestimmt wird; und wenn der Projektionsbereich ein zweiter Bereich im Innenraum des Fahrzeugs ist, der Beleuchtungsparameter auf der Grundlage eines zweiten Zielbereichs im Einzelbild bestimmt wird.

4. Verfahren nach einem der Ansprüche 1 bis 3, ferner umfassend:

   Senden des Einzelbilds an einen Server; und das Erhalten des Beleuchtungsparameters Folgendes umfasst:
   Erhalten des Beleuchtungsparameters vom Server.

5. Verfahren nach einem der Ansprüche 1 bis 3, wobei das Erhalten des Beleuchtungsparameters Folgendes umfasst:
   Eingeben des Einzelbilds in ein Beleuchtungsparametermodell zum Erhalten des Beleuchtungsparameters.

6. Vorrichtung (3000) zur Verarbeitung virtueller Bilder, umfassend:

   eine erste Erhalteeinheit (3010), die dafür ausgelegt ist, ein Einzelbild einer ersten Umgebung zu erhalten, wobei die erste Umgebung einen Innenraum eines Fahrzeugs oder eine Umgebung, in der sich das Fahrzeug befindet, umfasst, und das Einzelbild verwendet wird, um einen Beleuchtungsparameter der ersten Umgebung zu bestimmen;
   eine zweite Erhalteeinheit (3020), die dafür ausgelegt ist, den Beleuchtungsparameter zu erhalten; und
   eine Verarbeitungseinheit (3030), die dafür ausgelegt ist, ein virtuelles Bild auf der Grundlage des Beleuchtungsparameters zu erhalten, um die Konsistenz zwischen einem Beleuchtungseffekt des virtuellen Bildes und einer Beleuchtungssituation der ersten Umgebung zu verbessern,
   wobei das Einzelbild von einem Bildsensor erhalten wird, und die Vorrichtung ferner eine Steuereinheit (3040) umfasst, die für folgenden Vorgang ausgelegt ist:

      Steuern der Projektion des virtuellen Bildes in einem Projektionsbereich, wobei der Projektionsbereich einen Bereich im Innenraum des Fahrzeugs umfasst;
      **dadurch gekennzeichnet, dass** die Steuereinheit (3040) ferner für folgende Vorgänge ausgelegt ist:

         wenn sich die erste Umgebung in einer ersten Beleuchtungssituation befindet, Steuern des Bildsensors zum Erfassen eines Bildes mit einer ersten Häufigkeit; und
         wenn sich die erste Umgebung in einer zweiten Beleuchtungssituation befindet, Steuern des Bildsensors zum Erfassen eines Bilds mit einer zweiten Häufigkeit, wobei eine Änderungshäufigkeit einer Beleuchtungsintensität in der ersten Beleuchtungssituation höher ist als eine Änderungshäufigkeit einer Beleuchtungsintensität in der zweiten Beleuchtungssituation, und die erste Häufigkeit höher ist als die zweite Häufigkeit.

7. Vorrichtung (3000) nach Anspruch 6, wobei das Einzelbild ein Gesichtsbild umfasst und das Gesichtsbild zum Bestimmen des Beleuchtungsparameters der ersten Umgebung verwendet wird.

8. Vorrichtung (3000) nach Anspruch 6 oder 7, wobei, wenn der Projektionsbereich ein erster Bereich im Innenraum des Fahrzeugs ist, der Beleuchtungsparameter auf der Grundlage eines ersten Zielbereichs im Einzelbild bestimmt wird; und wenn der Projektionsbereich ein zweiter Bereich im Innenraum des Fahrzeugs ist, der Beleuchtungsparameter auf der Grundlage eines zweiten Zielbereichs im Einzelbild bestimmt wird.

9. Vorrichtung (3000) nach einem der Ansprüche 6 bis 8, wobei die Vorrichtung ferner eine Sendeeinheit umfasst, die für folgenden Vorgang ausgelegt ist:

   Senden des Einzelbilds an einen Server; und die zweite Erhalteeinheit (3020) insbesondere für folgenden Vorgang ausgelegt ist:
   Erhalten des Beleuchtungsparameters vom Server.

10. Vorrichtung (3000) nach einem der Ansprüche 6 bis 8, wobei die zweite Erhalteeinheit (3020) insbesondere für folgenden Vorgang ausgelegt ist:
    Eingeben des Einzelbilds in ein Beleuchtungsparametermodell zum Erhalten des Beleuchtungsparameters.

11. Computerlesbares Speichermedium, wobei das computerlesbare Medium Programmcode speichert, der bei seiner Ausführung durch eine Vorrichtung die Vorrichtung veranlasst, das Verfahren nach einem der Ansprüche 1 bis 5 durchzuführen.

**Revendications**

1. Procédé de traitement d'image virtuelle, comprenant :

   l'obtention (S310) d'une trame d'image d'un premier environnement, le premier environnement comprenant un habitacle d'un véhicule ou un environnement dans lequel le véhicule est localisé, et la trame d'image étant utilisée pour déterminer un paramètre d'éclairage du premier environnement ;
   l'obtention (S320) du paramètre d'éclairage ;
   l'obtention (S330) d'une image virtuelle sur la base du paramètre d'éclairage afin d'améliorer la cohérence entre un effet d'éclairage de l'image virtuelle et une condition d'éclairage du premier environnement ; et
   la commande (S340) de la projection de l'image virtuelle dans une zone de projection, la zone de projection comprenant une zone dans l'habitacle du véhicule ;
   dans lequel la trame d'image est obtenue à partir d'un capteur d'images ;
   **caractérisé en ce que** le procédé comprend en outre :

   lorsque le premier environnement est dans une première condition d'éclairage, le fait de commander au capteur d'images de capturer une image à une première fréquence ; et
   lorsque le premier environnement est dans une deuxième condition d'éclairage, le fait de commander au capteur d'images de capturer une image à une deuxième fréquence, dans lequel une fréquence de changement d'une intensité d'éclairage sous la première condition d'éclairage est plus élevée qu'une fréquence de changement d'une intensité d'éclairage sous la deuxième condition d'éclairage, et la première fréquence est plus élevée que la deuxième fréquence.

2. Procédé selon la revendication 1, dans lequel la trame d'image comprend une image de visage, et l'image de visage est utilisée pour déterminer le paramètre d'éclairage du premier environnement.

3. Procédé selon la revendication 1 ou 2, dans lequel lorsque la zone de projection est une première zone dans l'habitacle du véhicule, le paramètre d'éclairage est déterminé sur la base d'une première zone cible dans la trame d'image ; et lorsque la zone de projection est une deuxième zone dans l'habitacle du véhicule, le paramètre d'éclairage est déterminé sur la base d'une deuxième zone cible dans la trame d'image.

4. Procédé selon n'importe laquelle des revendications 1 à 3, comprenant en outre :

   l'envoi de la trame d'image à un serveur ; et l'obtention du paramètre d'éclairage comprend :
   l'obtention du paramètre d'éclairage à partir du serveur.

**5.** Procédé selon n'importe laquelle des revendications 1 à 3, dans lequel l'obtention du paramètre d'éclairage comprend :
l'introduction de la trame d'image dans un modèle de paramètre d'éclairage pour obtenir le paramètre d'éclairage.

**6.** Appareil de traitement d'image virtuelle (3000), comprenant :

une première unité d'obtention (3010), configurée pour obtenir une trame d'image d'un premier environnement, le premier environnement comprenant un habitacle d'un véhicule ou un environnement dans lequel le véhicule est localisé, et la trame d'image étant utilisée pour déterminer un paramètre d'éclairage du premier environnement ;
une deuxième unité d'obtention (3020), configurée pour obtenir le paramètre d'éclairage ; et
une unité de traitement (3030), configurée pour obtenir une image virtuelle sur la base du paramètre d'éclairage afin d'améliorer la cohérence entre un effet d'éclairage de l'image virtuelle et une condition d'éclairage du premier environnement,
dans lequel la trame d'image est obtenue à partir d'un capteur d'images, et l'appareil comprend en outre une unité de commande (3040), configurée pour :

commander la projection de l'image virtuelle dans une zone de projection, la zone de projection comprenant une zone dans l'habitacle du véhicule ;
**caractérisé en ce que** l'unité de commande (3040) est configurée en outre pour :
lorsque le premier environnement est dans une première condition d'éclairage, commander au capteur d'images de capturer une image à une première fréquence ; et lorsque le premier environnement est dans une deuxième condition d'éclairage, commander au capteur d'images de capturer une image à une deuxième fréquence, dans lequel une fréquence de changement d'une intensité d'éclairage sous la première condition d'éclairage est plus élevée qu'une fréquence de changement d'une intensité d'éclairage sous la deuxième condition d'éclairage, et la première fréquence est plus élevée que la deuxième fréquence.

**7.** Appareil (3000) selon la revendication 6, dans lequel la trame d'image comprend une image de visage, et l'image de visage est utilisée pour déterminer le paramètre d'éclairage du premier environnement.

**8.** Appareil (3000) selon la revendication 6 ou 7, dans lequel lorsque la zone de projection est une première zone dans l'habitacle du véhicule, le paramètre d'éclairage est déterminé sur la base d'une première zone cible dans la trame d'image ; et lorsque la zone de projection est une deuxième zone dans l'habitacle du véhicule, le paramètre d'éclairage est déterminé sur la base d'une deuxième zone cible dans la trame d'image.

**9.** Appareil (3000) selon n'importe laquelle des revendications 6 à 8, l'appareil comprenant en outre une unité d'envoi, configurée pour :

envoyer la trame d'image à un serveur ; et
la deuxième unité d'obtention (3020) étant configurée spécifiquement pour :
obtenir le paramètre d'éclairage à partir du serveur.

**10.** Appareil (3000) selon n'importe laquelle des revendications 6 à 8, dans lequel la deuxième unité d'obtention (3020) est configurée spécifiquement pour :
introduire la trame d'image dans un modèle de paramètre d'éclairage pour obtenir le paramètre d'éclairage.

**11.** Support de stockage lisible par ordinateur, le support lisible par ordinateur stockant un code de programme qui, lorsqu'il est exécuté par un dispositif, amène le dispositif à réaliser le procédé selon n'importe laquelle des revendications 1 à 5.

FIG. 1

EP 4 459 560 B1

Data collection device
260

Data stream

Database
230

Training device 220

Data stream

System architecture 200

Execution device 210

Data
collection
device
240

Input
data

I/O
interface
212

Target model/rule 101

Computing module 211

Data storage
system 250

Output
a result

FIG. 2

300

| Obtain an image frame of a first environment, where the image frame is used to determine a lighting parameter of the first environment | ⟋⟍ S310 |

| Obtain the lighting parameter of the first environment | ⟋⟍ S320 |

| Obtain a virtual image based on the lighting parameter | ⟋⟍ S330 |

| Control projection of the virtual image in a projection area | ⟋⟍ S340 |

FIG. 3

400

| Obtain a sample image frame | ⟋⟍ S410 |

| Obtain a lighting parameter model through training based on the sample image frame | ⟋⟍ S420 |

FIG. 4

FIG. 5

A neural network model outputs a lighting parameter

Perform lighting effect rendering on a human head model based on the lighting parameter

FIG. 6

<u>700</u>

| Obtain a face image in a cabin | S710 |
|---|---|
| Input the face image into a lighting parameter model to predict a lighting parameter | S720 |
| Perform lighting effect rendering on an original virtual image based on the lighting parameter | S730 |

FIG. 7

Position of a CMS camera

FIG. 8

FIG. 9

FIG. 10

Apparatus 3000

First obtaining unit 3010

Second obtaining unit 3020

Processing unit 3030

Control unit 3040

FIG. 11

Apparatus 4000

Obtaining unit 4010

Processing unit 4020

Sending unit 4030

FIG. 12

Apparatus 5000

Memory 5001

Processor 5002

Bus 5004

Communication interface 5003

FIG. 13

**EP 4 459 560 B1**

**Patent documents cited in the description**

- US 2020013223 A1